# EUROPÄISCHE PATENTSCHRIFT

(11) **EP 3 769 143 B1**
(45) Veröffentlichungstag und Bekanntmachung des Hinweises auf die Patenterteilung: **07.06.2023**
(21) Anmeldenummer: 19702098.5
(22) Anmeldetag: 04.02.2019
(51) Int. Cl.: G02B 27/01, B32B 17/10

(54) **PROJEKTIONSANORDNUNG FÜR EIN HEAD-UP-DISPLAY (HUD) MIT P-POLARISIERTEN STRAHLUNGSANTEILEN**
PROJECTION DEVICE FOR A HEAD-UP DISPLAY (HUD) WITH P-POLARIZED IRRADIATION COMPONENTS
DISPOSITIF DE PROJECTION POUR UN AFFICHAGE TÊTE HAUTE (HUD) COMPRENANT DES PARTIES DE RAYONNEMENT À POLARISATION P

(30) Priorität: 22.03.2018 EP 18163269
(43) Veröffentlichungstag der Anmeldung: 27.01.2021
(73) Patentinhaber: SAINT-GOBAIN GLASS FRANCE, 92400 Courbevoie (FR)
(72) Erfinder: FISCHER, Klaus, 52477 Alsdorf (DE); SCHAEFER, Dagmar, 52134 Herzogenrath (DE); ZIMMERMANN, Roberto, 42653 Solingen (DE); SCHULZ, Valentin, 52382 Niederzier (DE)
(74) Vertreter: Feist, Florian Arno
(86) Internationale Anmeldenummer: PCT/EP2019/052574
(87) Internationale Veröffentlichungsnummer: WO 2019/179683

(56) Entgegenhaltungen:
- WO-A1-2017/198363
- DE-U1-202017 102 552
- US-A1- 2013 302 580
- US-A1- 2017 242 247

## Beschreibung

Die Erfindung betrifft eine Projektionsanordnung für ein Head-Up-Display und die Verwendung einer Verbundscheibe in einer solchen Projektionsanordnung.

Moderne Automobile werden in zunehmendem Maße mit sogenannten Head-Up-Displays (HUDs) ausgestattet. Mit einem Projektor, typischerweise im Bereich des Armaturenbretts, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

Bei den vorstehend beschriebenen Head-Up-Displays tritt das Problem auf, dass das Projektorbild an beiden Oberflächen der Windschutzscheibe reflektiert wird. Dadurch nimmt der Fahrer nicht nur das gewünschte Hauptbild wahr, welches durch die Reflexion an der innenraumseitigen Oberfläche der Windschutzscheibe hervorgerufen wird (Primärreflexion). Der Fahrer nimmt auch ein leicht versetztes, in der Regel intensitätsschwächeres Nebenbild wahr, welches durch die Reflexion an der außenseitigen Oberfläche der Windschutzscheibe hervorgerufen wird (Sekundärreflexion). Letzteres wird gemeinhin auch als Geisterbild ("Ghost") bezeichnet. Dieses Problem wird gemeinhin dadurch gelöst, dass die reflektierenden Oberflächen mit einem bewusst gewählten Winkel zueinander angeordnet werden, so dass Hauptbild und Geisterbild überlagert werden, wodurch das Geisterbild nicht mehr störend auffällt.

Windschutzscheiben bestehen aus zwei Glasscheiben, welche über eine thermoplastische Folie miteinander laminiert sind. Sollen die Oberflächen der Glasscheiben wie beschrieben in einem Winkel angeordnet werden, so ist es üblich, eine thermoplastische Folie mit nichtkonstanter Dicke zu verwenden. Man spricht auch von einer keilförmigen Folie oder Keilfolie. Der Winkel zwischen den beiden Oberflächen der Folie wird als Keilwinkel bezeichnet. Der Keilwinkel kann über die gesamte Folie konstant (lineare Dickenänderung) sein oder sich positionsabhängig ändern (nichtlineare Dickenänderung). Verbundgläser mit Keilfolien sind beispielsweise aus WO2009/071135A1, EP1800855B1 oder EP1880243A2 bekannt.

Es ist auch bekannt, Windschutzscheiben mit transparenten, elektrisch leitfähigen Beschichtungen zu versehen. Diese Beschichtungen können als IR-reflektierende Beschichtungen wirken, um die Erwärmung des Fahrzeuginnenraums zu verringern und dadurch den thermischen Komfort zu verbessern. Die Beschichtungen können aber auch als beheizbare Beschichtungen verwendet werden, indem sie mit einer Spannungsquelle verbunden werden, so dass ein Strom durch die Beschichtung fließt. Geeignete Beschichtungen enthalten leifähige, metallische Schichten beispielsweise auf Basis von Silber oder Aluminium. Da diese Schichten korrosionsanfällig sind, ist es üblich, sie auf die der Zwischenschicht zugewandten Oberfläche der Außenscheibe oder der Innenscheibe aufzubringen, so dass sie keinen Kontakt zur Atmosphäre haben. Silberhaltige transparente Beschichtungen sind beispielsweise bekannt aus WO 03/024155, US 2007/0082219 A1, US 2007/0020465 A1, WO2013/104438 oder WO2013/104439. Im Zusammenhang mit Head-Up-Displays weisen beschichtete Windschutzscheiben häufig das Problem auf, dass durch die leitfähige Beschichtung eine weitere reflektierende Grenzfläche für das Projektorbild gebildet wird. Dies führt zu einem weiteren unerwünschten Nebenbild, welches auch als Schicht-Geisterbild oder Schicht-"Ghost" bezeichnet wird.

Die Strahlung des HUD-Projektors ist typischerweise im Wesentlichen s-polarisiert aufgrund der besseren Reflexionscharakteristik der Windschutzscheibe im Vergleich zur p-Polarisation. Trägt der Fahrer jedoch eine polarisationsselektive Sonnenbrille, welche lediglich p-polarisiertes Licht transmittiert, so kann er das HUD-Bild kaum oder gar nicht wahrnehmen. Es besteht daher Bedarf an HUD-Projektionsanordnungen, welche mit polarisationsselektiven Sonnenbrillen kompatibel sind.

Die DE 10 2014 220 189 A1 offenbart eine HUD-Projektionsanordnung, welche mit p-polarisierter Strahlung betrieben wird, um ein HUD-Bild zu erzeugen, das auch mit polarisationsselektiven Sonnenbrillen wahrnehmbar ist. Da der Einstrahlwinkel typischerweise nahe dem Brewsterwinkel liegt und p-polarisierte Strahlung daher nur in geringem Maße von den Glasoberflächen reflektiert wird, weist die Windschutzscheibe eine reflektierende Struktur auf, die p-polarisierte Strahlung in Richtung des Fahrers reflektieren kann. Als reflektierende Struktur wird unter anderem eine einzelne metallische Schicht vorgeschlagen mit einer Dicke von 5 nm bis 9 nm, beispielsweise aus Silber oder Aluminium. Zwar kann ein p-polarisiertes HUD-Bild von Fahrern mit und ohne polarisationsselektiver Sonnenbrille wahrgenommen werden, jedoch wird dieses hauptsächlich von der metallischen Schicht, nicht jedoch von den Glasoberflächen signifikant reflektiert. Hierdurch wird die Intensität des HUD-Bildes beschränkt.

Die US 2017/0242247 A1 offenbart ebenfalls eine HUD-Projektionsanordnung, welche mit p-polarisierter Strahlung betrieben wird, wobei die Windschutzscheibe mit einer elektrisch leitfähigen Beschichtung versehen ist. Die die elektrisch leitfähige Beschichtung weist im Spektralbereich von 400 nm bis 650 nm ein lokales Reflexionsmaximum für p-polarisierte Strahlung auf, welches im Bereich von 510 nm bis 550 nm befindlich ist. Der Anteil von p-polarisierter Strahlung an der Gesamtstrahlung des HUD-Projektors beträgt 100%.

Der Erfindung liegt die Aufgabe zugrunde, eine verbesserte Projektionsanordnung für ein Head-Up-Display bereitzustellen, wobei die verwendete Verbundscheibe mit einer elektrisch leitfähigen Beschichtung versehen ist. Das Head-Up-Display soll auch für Fahrer mit einer polarisationsselektiven Sonnenbrille gut wahrnehmbar sein und eine hohe Intensität aufweisen.

Die Aufgabe der vorliegenden Erfindung wird erfindungsgemäß durch eine Projektionsanordnung gemäß Anspruch 1 beziehungsweise durch die Verwendung einer Verbundscheibe gemäß Anspruch 15 gelöst. Bevorzugte Ausführungen gehen aus der Unteransprüchen hervor.

Erfindungsgemäß wird eine teilweise p-polarisierte Strahlung zur Erzeugung des HUD-Bildes verwendet, nämlich eine Mischung aus s- und p-polarisierter Strahlung. S-polarisierte Strahlungsanteile werden von den Scheibenoberflächen effizient reflektiert. Da der für HUD-Projektionsanordnungen typische Einfallswinkel von etwa 65° dem Brewsterwinkel für einen Luft-Glas-Übergang (57,2°, Kalk-Natron-Glas) relativ nahekommt, werden die p-polarisierten Strahlungsanteile von den Scheibenoberflächen dagegen kaum reflektiert. Die erfindungsgemäße elektrisch leitfähige Beschichtung ist jedoch auf die Reflexion von p-polarisierter Strahlung optimiert. Ein Fahrer mit polarisationsselektiver Sonnenbrille, die lediglich p-polarisierte Strahlung passieren lässt, kann daher das HUD-Bild erkennen, welches durch den an der Beschichtung reflektierten Strahlungsanteil hervorgerufen wird. Ein Fahrer ohne eine solche Sonnenbrille erkennt ein HUD-Bild, welches durch die Überlagerung der s- und p-polarisierten Strahlungsanteile hervorgerufen wird, wodurch die Gesamtintensität gesteigert wird. Es resultiert also eine HUD-Projektion, welche sowohl von Fahrer mit polarisationsselektiver Sonnenbrille als auch von Fahrern ohne eine solche Sonnenbrille gut erkannt werden kann. Das ist der große Vorteil der vorliegenden Erfindung.

Die erfindungsgemäße Projektionsanordnung für ein Head-Up-Display (HUD) umfasst mindestens eine Verbundscheibe mit einer elektrisch leitfähigen Beschichtung und einen Projektor. Wie bei HUDs üblich bestrahlt der Projektor einen Bereich der Windschutzscheibe, wo die Strahlung in Richtung des Betrachters (Fahrers) reflektiert wird, wodurch ein virtuelles Bild erzeugt wird, welches der Betrachter von ihm aus gesehen hinter der Windschutzscheibe wahrnimmt. Der durch den Projektor bestrahlbare Bereich der Windschutzscheibe wird als HUD-Bereich bezeichnet. Die Strahlrichtung des Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Die Verbundscheibe umfasst eine Außenscheibe und eine Innenscheibe, die über eine thermoplastische Zwischenschicht miteinander verbunden sind. Die Verbundscheibe ist dafür vorgesehen, in einer Fensteröffnung, insbesondere der Fensteröffnung eines Fahrzeugs, den Innenraum gegenüber der äußeren Umgebung abzutrennen. Mit Innenscheibe wird im Sinne der Erfindung die dem Innenraum (insbesondere Fahrzeuginnenraum) zugewandte Scheibe der Verbundscheibe bezeichnet. Mit Außenscheibe wird die der äußeren Umgebung zugewandte Scheibe bezeichnet. Die Verbundscheibe ist bevorzugt eine Fahrzeug-Windschutzscheibe (insbesondere die Windschutzscheibe eines Kraftfahrzeugs, beispielsweise eines Personen- oder Lastkraftwagens).

Die Verbundscheibe weist eine Oberkante und eine Unterkante auf sowie zwei dazwischen verlaufende Seitenkanten. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet.

Die Außenscheibe und die Innenscheibe weisen jeweils eine außenseitige und eine innenraumseitige Oberfläche auf und eine dazwischen verlaufende, umlaufende Seitenkante. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die thermoplastische Zwischenschicht miteinander verbunden.

Die Verbundscheibe weist eine elektrisch leitfähige Beschichtung auf, insbesondere eine transparente, elektrisch leitfähige Beschichtung. Die elektrisch leitfähige Beschichtung ist bevorzugt auf einer der Zwischenschicht zugewandten Oberflächen der beiden Scheiben, also der innenraumseitigen Oberfläche der Außenscheibe oder der außenseitigen Oberfläche der Innenscheibe, aufgebracht. Alternativ kann die elektrisch leitfähige Beschichtung auch innerhalb der thermoplastischen Zwischenschicht angeordnet sein, beispielsweise aufgebracht auf einer Trägerfolie, die zwischen zwei thermoplastischen Verbindefolien angeordnet ist. Die leitfähige Beschichtung kann beispielsweise als IR-reflektierende Sonnenschutzbeschichtung vorgesehen sein oder auch als heizbare Beschichtung, welche elektrisch kontaktiert ist und sich bei Stromdurchfluss erwärmt. Unter einer transparenten Beschichtung wird eine Beschichtung verstanden, die eine mittlere Transmission im sichtbaren Spektralbereich von mindestens 70 %, bevorzugt mindestens 80 % aufweist, die also die Durchsicht durch die Scheibe nicht wesentlich einschränkt. Bevorzugt sind mindestens 80% der Scheibenoberfläche mit der erfindungsgemäßen Beschichtung versehen. Insbesondere ist die Beschichtung vollflächig auf die Scheibenoberfläche aufgebracht mit Ausnahme eines umlaufenden Randbereichs und optional lokaler Bereich, die als Kommunikations-, Sensor- oder Kamerafenster die Transmission von elektromagnetischer Strahlung durch die Verbundscheibe gewährleisten sollen und daher nicht mit der Beschichtung versehen sind. Der umlaufende unbeschichtete Randbereich weist beispielsweise eine Breite von bis zu 20 cm auf. Er verhindert den direkten Kontakt der Beschichtung zur umgebenden Atmosphäre, so dass die Beschichtung im Innern der Verbundscheibe vor Korrosion und Beschädigung geschützt ist.

Die elektrisch leitfähige Beschichtung ist ein Schichtstapel oder eine Schichtenfolge, umfassend eine oder mehrere elektrisch leifähige, insbesondere metallhaltige Schichten, wobei jede elektrisch leitfähige Schicht jeweils zwischen zwei dielektrischen Schichten oder Schichtenfolge angeordnet ist. Die Beschichtung ist also ein Dünnschicht-Stapel mit *n* elektrisch leitfähigen Schichten und (*n*+1) dielektrischen Schichten oder Schichtenfolgen, wobei *n* eine natürliche Zahl und wobei auf eine untere dielektrische Schicht oder Schichtenfolge jeweils im Wechsel eine leitfähige Schicht und eine dielektrische Schicht oder Schichtenfolge folgt. Solche Beschichtungen sind als Sonnenschutzbeschichtungen und heizbare Beschichtungen bekannt, wobei die elektrisch leitfähigen Schichten typischerweise auf Basis von Silber ausgebildet sind.

Die erfindungsgemäße elektrisch leitfähige Beschichtung ist derart eingestellt, insbesondere durch die Wahl der Materialien und Dicken der Einzelschichten sowie den Aufbau der dielektrischen Schichtenfolgen, dass im Spektralbereich von 400 nm bis 650 nm, bevorzugt im Spektralbereich von 400 nm bis 750 nm, nur ein einziges lokales Reflexionsmaximum für p-polarisierte Strahlung auftritt. Dieses Reflexionsmaximum für p-polarisierte Strahlung ist insbesondere im Spektralbereich von 510 nm bis 550 nm befindlich. In einer vorteilhaften Ausgestaltung stellt dieses lokale Reflexionsmaximum den höchstem Reflexionswert im Spektralbereich von 400 nm bis 650 nm dar, das heißt im Spektralbereich von 400 nm bis 650 nm tritt kein Reflexionsgrad für p-polarisierte Strahlung auf, welcher höher ist als der Reflexionsgrad des lokalen Maximums.

Die Erfinder haben erkannt, dass eine solche elektrisch leitfähige Beschichtung die p-polarisierten Strahlungsanteile effizient reflektiert und die Verbundscheibe zudem eine relativ neutrale Farbgebung in Transmission und Reflexion aufweist. Mit der erfindungsgemäß eingestellten Beschichtung ist es insbesondere möglich, den p-polarisierten Strahlungsanteil den Erfordernissen im Einzelfall entsprechend frei zu wählen, wobei die Farbgebung stets relativ neutral bleibt. So können die p-polarisierten Strahlungsanteile im Einzelfall, in Abhängigkeit vom verwendeten Projektor, der Wellenlänge seiner Strahlung, dem Einstrahlwinkel und der Geometrie der Verbundscheibe, so gewählt werden, dass eine vorteilhafte Gesamtintensität erreicht wird. Die Erfindung ist daher flexibel anwendbar für verschiedene HUD-Systeme, was einen großen Vorteil darstellt.

Entscheidend für die Eigenschaften der Projektionsanordnung ist das Reflexionsverhalten der Verbundscheibe, welches wesentlich durch die elektrisch leitfähige Beschichtung bestimmt wird. Das Reflexionsspektrum wird an der mit der elektrisch leitfähigen Beschichtung versehenen Verbundscheibe gemessen. Genau gesagt beziehen sich die hier beschriebenen Reflexionseigenschaften für p- oder s-polarisierte Strahlung (Reflexionsgrad, lokale Reflexionsmaxima) also nicht auf die isolierte elektrisch leitfähige Beschichtung, sondern auf die Verbundscheibe mit der elektrisch leitfähigen Beschichtung.

Der Reflexionsgrad beschreibt den Anteil der insgesamt eingestrahlten Strahlung, der reflektiert wird. Er wird in % angegeben (bezogen auf 100% eingestrahlte Strahlung) oder als einheitenlose Zahl von 0 bis 1 (normiert auf die eingestrahlte Strahlung). Aufgetragen in Abhängigkeit von der Wellenlänge bildet er das Reflexionsspektrum.

Die Differenz zwischen dem Reflexionsgrad für p-polarisierte Strahlung, der am lokalen Reflexionsmaximum im Spektralbereich von 400 nm bis 6500 nm auftritt, und dem im Spektralbereich von 400 nm bis 650 nm minimal auftretenden Reflexionsgrad für p-polarisierte Strahlung, beträgt in einer vorteilhaften Ausgestaltung höchstens 10%, bevorzugt höchstens 8%. Die Reflexionskurve ist dann relativ flach, was vorteilhaft ist im Hinblick auf eine möglichst farbtreue Darstellung des Projektorbildes. Die Prozentzahlen geben hier die absolute Differenz des Reflexionsgrades (bezogen auf 100% eingestrahlte Strahlung) an.

Auch das Reflexionsspektrum für s-polarisierte Strahlung sollte möglichst flach sein, also keine ausgeprägten Maxima und Minima aufweisen, insbesondere im Spektralbereich von 450 nm und 600 nm. Wenn die Reflexionsspektren für beide Polarisationsrichtungen hinreichend flach sind, so können vorteilhafterweise die relativen Anteile von s-polarisierter und p-polarisierter Strahlung frei gewählt werden, ohne dass dies mit einer unerwünschten Farbverschiebung einhergeht. In einer vorteilhaften Ausgestaltung ist der Reflexionsgrad für s-polarisierte Strahlung im Spektralbereich von 450 nm bis 600 nm im Wesentlichen konstant. Damit ist im Sinne der Erfindung gemeint, dass die Differenz zwischen dem maximal auftretenden Reflexionsgrad und dem Mittelwert sowie die Differenz zwischen dem minimal auftretenden Reflexionsgrad und dem Mittelwert höchstens 5% betragen, bevorzugt höchstens 3%, besonders bevorzugt höchstens 1%. Die Prozentzahlen geben hier die absolute Differenz des Reflexionsgrades (bezogen auf 100% eingestrahlte Strahlung) an.

Der Projektor ist innenraumseitig der Verbundscheibe angeordnet und bestrahlt die Verbundscheibe über die innenraumseitige Oberfläche der Innenscheibe. Er ist auf den HUD-Bereich gerichtet und bestrahlt diesen zur Erzeugung der HUD-Projektion.

Für die Gesamtintensität des HUD ist es vorteilhaft, wenn die Strahlung des Projektors sowohl s-polarisierte als auch p-polarisierte Anteile aufweist. In diesem Fall werden die p-polarisierten Strahlungsanteile effizient von der Beschichtung reflektiert und die s-polarisierten Strahlungsanteile von den Scheibenoberflächen. Der Anteil von p-polarisierter Strahlung an der Gesamtstrahlung des Projektors beträgt erfindungsgemäß von 20% bis 80%. In einer besonders vorteilhaften Ausgestaltung beträgt der Anteil p-polarisierter Strahlung dabei mindestens 50 %, also von 50% bis 80%, wodurch insbesondere sichergestellt ist, dass ein Fahrer mit polarisationsselektiver Sonnenbrille ein intensitätsstarkes Bild wahrnehmen kann. Die Angabe der Polarisationsrichtung bezieht sich dabei auf die Einfallsebene der Strahlung auf der Verbundscheibe. Mit p-polarisierter Strahlung wird eine Strahlung bezeichnet, deren elektrisches Feld in der Einfallsebene schwingt. Mit s-polarisierter Strahlung wird eine Strahlung bezeichnet, deren elektrisches Feld senkrecht zur Einfallsebene schwingt. Die Einfallsebene wird durch den Einfallsvektor und die Flächennormale der Verbundscheibe im geometrischen Zentrum des HUD-Bereichs aufgespannt.

Die Strahlung des Projektors trifft bevorzugt mit einem Einfallswinkel von 50° bis 80°, insbesondere von 60° bis 70° auf die Verbundscheibe, typischerweise etwa 65°, wie es bei HUD-Projektionsanordnungen üblich ist. Der Einfallswinkel ist der Winkel zwischen dem Einfallsvektor der Projektorstrahlung und der Flächennormale im geometrischen Zentrum des HUD-Bereichs.

Die erfindungsgemäße elektrisch leitfähige Beschichtung weist in einer bevorzugten Ausgestaltung mindestens zwei funktionelle, elektrisch leitfähige Schichten auf, besonders bevorzugt mindestens drei elektrisch leitfähige Schichten, ganz besonders bevorzugt mindestens vier elektrisch leitfähige Schichten, insbesondere genau vier elektrisch leitfähige Schichten. Durch die hohe Anzahl von leitfähigen Schichten stehen ausreichend Freiheitsgrade zur Verfügung, um die Beschichtung hinsichtlich Transmissions- und Reflexionsverhalten und Farbgebung zu optimieren.

Durch die funktionellen, elektrisch leitfähigen Schichten wird die elektrische Leitfähigkeit der Beschichtung bewirkt. Durch die Aufteilung des gesamten leitenden Materials auf mehrere voneinander getrennte Schichten können diese jeweils dünner ausgestaltet werden, wodurch die Transparenz der Beschichtung erhöht wird. Jede elektrisch leitfähige Schicht enthält bevorzugt zumindest ein Metall oder eine Metalllegierung, beispielsweise Silber, Aluminium, Kupfer oder Gold, und ist besonders bevorzugt auf Basis des Metalls oder der Metalllegierung ausgebildet, das heißt besteht im Wesentlichen aus dem Metall oder der Metalllegierung abgesehen von etwaigen Dotierungen oder Verunreinigungen. Bevorzugt kommen Silber oder eine silberhaltige Legierung zum Einsatz. In einer vorteilhaften Ausgestaltung enthält die elektrisch leitfähige Schicht mindestens 90 Gew. % Silber, bevorzugt mindestens 99 Gew. % Silber, besonders bevorzugt mindestens 99,9 Gew. % Silber.

Jede elektrisch leitfähige Schicht weist bevorzugt eine Schichtdicke von 3 nm bis 20 nm, besonders bevorzugt von 5 nm bis 15 nm auf. Die Gesamtschichtdicke aller elektrisch leitfähigen Schichten beträgt bevorzugt von 20 nm bis 50 nm, besonders bevorzugt von 30 nm bis 40 nm.

Zwischen den elektrisch leitfähigen Schichten sowie unterhalb der untersten leitfähigen Schicht und oberhalb der obersten leitfähigen Schicht sind erfindungsgemäß dielektrische Schichten oder Schichtenfolgen angeordnet. Jede dielektrische Schicht oder Schichtenfolge weist zumindest eine Entspiegelungsschicht auf. Die Entspiegelungsschichten senken die Reflexion von sichtbarem Licht und erhöhen somit die Transparenz der beschichteten Scheibe. Die Entspiegelungsschichten enthalten beispielsweise Siliziumnitrid (SiN), Silizium-Metall-Mischnitride wie Siliziumzirkoniumnitrid (SiZrN), Aluminiumnitrid (AIN) oder Zinnoxid (SnO). Die Entspiegelungsschichten können darüber hinaus Dotierungen aufweisen. Die Schichtdicke der einzelnen Entspiegelungsschichten beträgt bevorzugt von 10 nm bis 70 nm.

Die Entspiegelungsschichten können wiederum in mindestens zwei Teilschichten unterteilt sein, insbesondere in eine dielektrische Schicht mit einem Brechungsindex kleiner 2,1 und eine optisch hochbrechende Schicht mit einem Brechungsindex größer oder gleich 2,1. Bevorzugt ist zumindest eine zwischen zwei elektrisch leitfähigen Schichten angeordnete Entspiegelungsschicht derart unterteilt, besonders bevorzugt jede zwischen zwei elektrisch leitfähigen Schichten angeordnete Entspiegelungsschicht. Die Unterteilung der Entspiegelungsschicht führt zu einem geringeren Flächenwiderstand der elektrisch leitfähigen Beschichtung bei gleichzeitig hoher Transmission und hoher Farbneutralität. Die Reihenfolge der beiden Teilschichten kann grundsätzlich beliebig gewählt werden, wobei die optisch hochbrechende Schicht bevorzugt oberhalb der dielektrischen Schicht angeordnet ist, was im Hinblick auf den Flächenwiderstand besonders vorteilhaft ist. Die Dicke der optisch hochbrechenden Schicht beträgt bevorzugt von 10 % bis 99 %, besonders bevorzugt von 25 % bis 75 % der Gesamtdicke der Entspiegelungsschicht.

Die optisch hochbrechende Schicht mit einem Brechungsindex größer oder gleich 2,1 enthält beispielsweise MnO, WOs, Nb₂O₅, Bi₂O₃, TiO₂, Zr₃N₄ und / oder AIN, bevorzugt ein Silizium-Metall-Mischnitrid, beispielsweise Silizium-Aluminium-Mischnitrid, Silizium-Hafnium-Mischnitrid oder Silizium-Titan-Mischnitrid, besonders bevorzugt Silizium-Zirkonium-Mischnitrid (SiZrN). Das ist besonders vorteilhaft im Hinblick auf den Flächenwiderstand der elektrisch leitfähigen Beschichtung. Das Silizium-Zirkonium-Mischnitrid weist bevorzugt Dotierungen auf. Die Schicht eines optisch hochbrechenden Materials kann beispielsweise ein Aluminium-dotiertes Silizium-Zirkonium-Mischnitrid enthalten. Der Anteil an Zirkonium beträgt dabei bevorzugt zwischen 15 und 45 Gew.-%, besonders bevorzugt zwischen 15 und 30 Gew.-%.

Die dielektrische Schicht mit einem Brechungsindex kleiner 2,1 weist bevorzugt einen Brechungsindex n zwischen 1,6 und 2,1 auf, besonders bevorzugt zwischen 1,9 und 2,1. Die dielektrische Schicht enthält bevorzugt zumindest ein Oxid, beispielsweise Zinnoxid, und/oder ein Nitrid, besonders bevorzugt Siliziumnitrid.

In einer bevorzugten Ausgestaltung ist jede zwischen zwei elektrisch leitfähigen Schichten angeordnete Entspiegelungsschicht unterteilt in eine dielektrische Schicht mit einem Brechungsindex kleiner 2,1 und eine optisch hochbrechende Schicht mit einem Brechungsindex größer oder gleich 2,1. Die Dicke jeder zwischen zwei elektrisch leitfähigen Schichten angeordnete Entspiegelungsschicht beträgt von 15 nm bis 60 nm. Die Entspiegelungsschichten oberhalb der obersten elektrisch leitfähigen Schicht und unterhalb der untersten elektrisch leitfähigen Schicht können ebenfalls unterteilt sein, sind aber bevorzugt als Einzelschichten ausgebildet und weisen jeweils eine Dicke von 10 nm bis 25 nm auf.

In einer vorteilhaften Ausgestaltung weist eine oder weisen mehrere dielektrische Schichtenfolgen eine erste Anpassungsschicht auf, bevorzugt jede dielektrische Schichtenfolge, die unterhalb einer elektrisch leitfähigen Schicht angeordnet ist. Die erste Anpassungsschicht ist bevorzugt oberhalb der Entspiegelungsschicht angeordnet.

In einer vorteilhaften Ausgestaltung weist eine oder weisen mehrere dielektrische Schichtenfolgen eine Glättungsschicht auf, bevorzugt jede dielektrische Schichtenfolge, die zwischen zwei elektrisch leitfähigen Schichten angeordnet ist. Die Glättungsschicht ist unterhalb einer der ersten Anpassungsschichten angeordnet, bevorzugt zwischen der Entspiegelungsschicht und der ersten Anpassungsschicht. Die Glättungsschicht steht besonders bevorzugt in direktem Kontakt zur ersten Anpassungsschicht. Die Glättungsschicht bewirkt eine Optimierung, insbesondere Glättung der Oberfläche für eine anschließend oberhalb aufgebrachte elektrisch leitfähige Schicht. Eine auf eine glattere Oberfläche abgeschiedene elektrisch leitfähige Schicht weist einen höheren Transmissionsgrad bei einem gleichzeitig niedrigeren Flächenwiderstand auf. Die Schichtdicke einer Glättungsschicht beträgt bevorzugt von 3 nm bis 20 nm, besonders bevorzugt von 4 nm bis 12 nm. Die Glättungsschicht weist bevorzugt einen Brechungsindex von kleiner als 2,2 auf.

Die Glättungsschicht enthält bevorzugt zumindest ein nichtkristallines Oxid. Das Oxid kann amorph oder teilamorph (und damit teilkristallin) sein, ist aber nicht vollständig kristallin. Die nichtkristalline Glättungsschicht weist eine geringe Rauheit auf und bildet somit eine vorteilhaft glatte Oberfläche für die oberhalb der Glättungsschicht aufzubringenden Schichten. Die nichtkristalline Glättungsschicht bewirkt weiter eine verbesserte Oberflächenstruktur der direkt oberhalb der Glättungsschicht abgeschiedenen Schicht, welche bevorzugt die erste Anpassungsschicht ist. Die Glättungsschicht kann beispielsweise zumindest ein Oxid eines oder mehrerer der Elemente Zinn, Silizium, Titan, Zirkonium, Hafnium, Zink, Gallium und Indium enthalten. Die Glättungsschicht enthält besonders bevorzugt ein nichtkristallines Mischoxid. Die Glättungsschicht enthält ganz besonders bevorzugt ein Zinn-Zink-Mischoxid (ZnSnO). Das Mischoxid kann Dotierungen aufweisen. Die Glättungsschicht kann beispielsweise ein Antimon-dotiertes Zinn-Zink-Mischoxid enthalten. Das Mischoxid weist bevorzugt einen unterstöchiometrischen Sauerstoffgehalt auf. Der Zinn Anteil beträgt dabei bevorzugt zwischen 10 und 40 Gew.-%, besonders bevorzugt zwischen 12 und 35 Gew.-%.

In einer vorteilhaften Ausgestaltung weist eine oder weisen mehrere dielektrische Schichtenfolgen eine zweite Anpassungsschicht auf, bevorzugt jede dielektrische Schichtenfolge, die oberhalb einer elektrisch leitfähigen Schicht angeordnet ist. Die zweite Anpassungsschicht ist bevorzugt unterhalb der Entspiegelungsschicht angeordnet.

Die ersten und die zweiten Anpassungsschichten bewirken eine Verbesserung des Flächenwiderstands der Beschichtung. Die erste Anpassungsschicht und/oder die zweite Anpassungsschicht enthält bevorzugt Zinkoxid ZnO_{1-δ} mit 0 ≤ δ ≤ 0,01. Die erste Anpassungsschicht und/oder die zweite Anpassungsschicht enthält weiter bevorzugt Dotierungen. Die erste Anpassungsschicht und/oder die zweite Anpassungsschicht kann beispielsweise Aluminium-dotiertes Zinkoxid (ZnO:Al) enthalten. Das Zinkoxid wird bevorzugt unterstöchiometrisch bezüglich des Sauerstoffs abgeschieden um eine Reaktion von überschüssigem Sauerstoff mit der silberhaltigen Schicht zu vermeiden. Die Schichtdicken der ersten Anpassungsschicht und der zweiten Anpassungsschicht betragen bevorzugt von 3 nm bis 20 nm, besonders bevorzugt von 4 nm bis 12 nm.

In einer vorteilhaften Ausgestaltung umfasst die elektrisch leitfähige Beschichtung eine oder mehrere Blockerschichten. Bevorzugt ist mindestens einer, besonders bevorzugt jeder elektrisch leitfähigen Schicht mindestens eine Blockerschicht zugeordnet. Die Blockerschicht steht in direktem Kontakt zur elektrisch leitfähigen Schicht und ist unmittelbar oberhalb oder unmittelbar unterhalb der elektrisch leitfähigen Schicht angeordnet. Zwischen der elektrisch leitfähigen Schicht und der Blockerschicht ist also keine weitere Schicht angeordnet. Es kann auch jeweils eine Blockerschicht unmittelbar oberhalb und unmittelbar unterhalb einer leitfähigen Schicht angeordnet sein. Die Blockerschicht enthält bevorzugt Niob, Titan, Nickel, Chrom und / oder Legierungen davon, besonders bevorzugt Nickel-Chrom-Legierungen. Die Schichtdicke der Blockerschicht beträgt bevorzugt von 0,1 nm bis 2 nm, besonders bevorzugt von 0,1 nm bis 1 nm. Eine Blockerschicht unmittelbar unterhalb der elektrisch leitfähigen Schicht dient insbesondere zur Stabilisierung der elektrisch leitfähigen Schicht während einer Temperaturbehandlung und verbessert die optische Qualität der elektrisch leitfähigen Beschichtung. Eine Blockerschicht unmittelbar oberhalb der elektrisch leitfähigen Schicht verhindert den Kontakt der empfindlichen elektrisch leitfähigen Schicht mit der oxidierenden reaktiven Atmosphäre während der Abscheidung der folgenden Schicht durch reaktive Kathodenzerstäubung, beispielsweise der zweiten Anpassungsschicht.

Ist eine erste Schicht oberhalb einer zweiten Schicht angeordnet, so bedeutet dies im Sinne der Erfindung, dass die erste Schicht weiter von dem Substrat, auf dem die Beschichtung aufgebracht ist, entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht. Ist eine erste Schicht oberhalb oder unterhalb einer zweiten Schicht angeordnet, so bedeutet dies im Sinne der Erfindung nicht notwendigerweise, dass sich die erste und die zweite Schicht in direktem Kontakt miteinander befinden. Es können eine oder mehrere weitere Schichten zwischen der ersten und der zweiten Schicht angeordnet sein, sofern dies nicht explizit ausgeschlossen wird. Die angegebenen Werte für Brechungsindizes sind bei einer Wellenlänge von 550 nm gemessen.

Die elektrisch leitfähige Beschichtung mit den erfindungsgemäßen Reflexionscharakteristika ist grundsätzlich auf verschiedene Arten realisierbar, bevorzugt unter Verwendung der vorstehend beschriebenen Schichten, so dass die Erfindung nicht auf eine bestimmte Schichtenfolge eingeschränkt ist. Nachfolgend wird eine besonders bevorzugte Ausgestaltung der Beschichtung vorgestellt, mit der besonders gute Ergebnisse erzielt werden, insbesondere bei einem typischen Einfallswinkel der Strahlung von etwa 65°.

In der besonders bevorzugten Ausgestaltung weist die leitfähige Beschichtung mindestens vier, insbesondere genau vier, elektrisch leitfähige Schichten auf. Jede elektrisch leitfähige Schicht weist bevorzugt eine Schichtdicke von 3 nm bis 20 nm, besonders bevorzugt von 5 nm bis 15 nm auf. Die Gesamtschichtdicke aller elektrisch leitfähigen Schichten beträgt bevorzugt von 20 nm bis 50 nm, besonders bevorzugt von 30 nm bis 40 nm.

Die Entspiegelungsschicht zwischen der zweiten und der dritten leitfähigen Schicht ist deutlich dicker ausgebildet (bevorzugt von 45 nm bis 55 nm) als die Entspiegelungsschichten zwischen der ersten und zweiten leitfähigen Schicht sowie zwischen der dritten und vierten leitfähigen Schicht (bevorzugt von 15 nm bis 35 nm, wobei insbesondere eine der beiden Entspiegelungsschichten eine Dicke von 15 nm bis 25 nm aufweist und die andere eine Dicke von 25 nm bis 35 nm). Die Entspiegelungsschicht zwischen der ersten und der zweiten elektrisch leitfähigen Schicht weist besonders bevorzugt eine Dicke von 25 nm bis 35 nm auf. Die Entspiegelungsschicht zwischen der zweiten und der dritten elektrisch leitfähigen Schicht weist besonders bevorzugt eine Dicke von 45 nm bis 55 nm auf. Die Entspiegelungsschicht zwischen der dritten und der vierten elektrisch leitfähigen Schicht weist besonders bevorzugt eine Dicke von 15 nm bis 25 nm auf.

Alle Entspiegelungsschichten, die zwischen zwei elektrisch leitfähigen Schichten angeordnet sind, sind wie vorstehend beschrieben unterteilt in eine dielektrische Schicht mit einem Brechungsindex kleiner 2,1 (bevorzugt auf Basis von Siliziumnitrid) und eine optisch hochbrechende Schicht mit einem Brechungsindex größer oder gleich 2,1 (bevorzugt auf Basis eines Silizium-Metall-Mischnitrids wie Siliziumzirkoniumnitrid oder Siliziumhafniumnitrid). Dabei entfallen bevorzugt von 25% bis 75% der Gesamtdicke der Entspiegelungsschichten auf die optisch hochbrechende Schicht.

Die Entspiegelungsschichten unterhalb der untersten leitfähigen Schicht und oberhalb der obersten leitfähigen Schicht sind als Einzelschichten ausgebildet mit einer Schichtdicke von 10 nm bis 25 nm. Bevorzugt ist die Entspiegelungsschicht unterhalb der untersten leitfähigen Schicht auf Basis von Siliziumnitrid ausgebildet mit einer Dicke von 15 nm bis 25 nm und die Entspiegelungsschicht oberhalb der obersten leitfähigen Schicht auf Basis eines Silizium-Metall-Mischnitrids wie Siliziumzirkoniumnitrid oder Siliziumhafniumnitrid mit einer Dicke von 8 nm bis 18 nm.

Die besonders bevorzugte Ausgestaltung der Beschichtung enthält außerdem Anpassungsschichten und Glättungsschichten, sowie optional Blockerschichten, wie vorstehend beschrieben.

Eine ganz besonders bevorzugte Ausgestaltung der elektrisch leitfähigen Beschichtung enthält ausgehend vom Substrat folgende Schichtenfolge, oder besteht aus dieser:
- eine Entspiegelungsschicht aus Basis von Siliziumnitrid mit einer Dicke von 20 nm bis 23 nm,
- eine erste Anpassungsschicht auf Basis von Zinkoxid mit einer Dicke von 8 nm bis 12 nm,
- eine elektrisch leitfähige Schicht auf Basis von Silber mit einer Dicke von 8 nm bis 11 nm,
- optional eine Blockerschicht auf Basis von NiCr mit einer Dicke von 0,1 nm bis 0,5 nm,
- eine zweite Anpassungsschicht auf Basis von Zinkoxid mit einer Dicke von 8 nm bis 12 nm,
- eine Entspiegelungsschicht mit einer Dicke von 28 nm bis 32 nm, bevorzugt unterteilt in eine dielektrische Schicht auf Basis von Siliziumnitrid mit einer Dicke von 14 nm bis 17 nm und eine optisch hochbrechende Schicht auf Basis eines Silizium-Metall-Mischnitrids wie Siliziumzirkoniumnitrid oder Siliziumhafniumnitrid mit einer Dicke von 14 nm bis 17 nm,
- eine Glättungsschicht auf Basis Zinn-Zink-Mischoxid mit einer Dicke von 5 nm bis 9 nm,
- eine erste Anpassungsschicht auf Basis von Zinkoxid mit einer Dicke von 8 nm bis 12 nm,
- eine elektrisch leitfähige Schicht auf Basis von Silber mit einer Dicke von 11 nm bis 14 nm,
- optional eine Blockerschicht auf Basis von NiCr mit einer Dicke von 0,1 nm bis 0,5 nm,
- eine zweite Anpassungsschicht auf Basis von Zinkoxid mit einer Dicke von 8 nm bis 12 nm,
- eine Entspiegelungsschicht mit einer Dicke von 48 nm bis 52 nm, bevorzugt unterteilt in eine dielektrische Schicht auf Basis von Siliziumnitrid mit einer Dicke von 33 nm bis 37 nm und eine optisch hochbrechende Schicht auf Basis eines Silizium-Metall-Mischnitrids wie Siliziumzirkoniumnitrid oder Siliziumhafniumnitrid mit einer Dicke von 14 nm bis 17 nm,
- eine Glättungsschicht auf Basis Zinn-Zink-Mischoxid mit einer Dicke von 5 nm bis 9 nm,
- eine erste Anpassungsschicht auf Basis von Zinkoxid mit einer Dicke von 8 nm bis 12 nm,
- eine elektrisch leitfähige Schicht auf Basis von Silber mit einer Dicke von 8 nm bis 11 nm,
- optional eine Blockerschicht auf Basis von NiCr mit einer Dicke von 0,1 nm bis 0,5 nm,
- eine zweite Anpassungsschicht auf Basis von Zinkoxid mit einer Dicke von 8 nm bis 12 nm,
- eine Entspiegelungsschicht mit einer Dicke von 18 nm bis 22 nm, bevorzugt unterteilt in eine dielektrische Schicht auf Basis von Siliziumnitrid mit einer Dicke von 4 nm bis 7 nm und eine optisch hochbrechende Schicht auf Basis eines Silizium-Metall-Mischnitrids wie Siliziumzirkoniumnitrid oder Siliziumhafniumnitrid mit einer Dicke von 14 nm bis 17 nm,
- eine Glättungsschicht auf Basis Zinn-Zink-Mischoxid mit einer Dicke von 5 nm bis 9 nm,
- eine erste Anpassungsschicht auf Basis von Zinkoxid mit einer Dicke von 8 nm bis 12 nm,
- eine elektrisch leitfähige Schicht auf Basis von Silber mit einer Dicke von 4 nm bis 7 nm,
- optional eine Blockerschicht auf Basis von NiCr mit einer Dicke von 0,1 nm bis 0,5 nm,
- eine zweite Anpassungsschicht auf Basis von Zinkoxid mit einer Dicke von 8 nm bis 12 nm,
- eine Entspiegelungsschicht aus Basis eines Silizium-Metall-Mischnitrids wie Siliziumzirkoniumnitrid oder Siliziumhafniumnitrid mit einer Dicke von 11 nm bis 15 nm,

Ist eine Schicht auf Basis eines Materials ausgebildet, so besteht die Schicht mehrheitlich aus diesem Material neben etwaigen Verunreinigungen oder Dotierungen.

Wie bei anderen gattungsgemäßen Projektionsanordnungen können unerwünschte Nebenbilder (sogenannte Geisterbilder) auftreten, welche insbesondere durch Fahrer ohne eine polarisationsselektive Sonnenbrille wahrgenommen werden. Die s-polarisierten Strahlungsanteile werden zunächst an der innenraumseitigen, von der Zwischenschicht abgewandten Oberfläche der Innenscheibe reflektiert. Der nichtreflektierte Teilstrahl verläuft durch die Verbundscheibe hindurch und wird an der außenseitigen, von der Zwischenschicht abgewandten Oberfläche der Außenscheibe ein weiteres Mal reflektiert. Dadurch wird ein unerwünschtes zweites virtuelles Bild, das sogenannte Geisterbild oder "Ghost" erzeugt. Es empfiehlt sich, Maßnahme zu treffen, das Auftreten des Geisterbildes zu vermeiden oder zumindest zu reduzieren. Hierfür werden im Rahmen der Erfindung zwei Ausgestaltungen vorgeschlagen.

In einer ersten vorteilhaften Ausgestaltung wird als thermoplastische Zwischenschicht eine sogenannte Keilfolie verwendet. Dabei ist die Dicke der Zwischenschicht im vertikalen Verlauf zwischen der Unterkante und der Oberkante der Verbundscheibe zumindest im HUD-Bereich veränderlich, insbesondere monoton ansteigend. Die Dicke kann sich aber auch im gesamten vertikalen Verlauf ändern, insbesondere ausgehend von der Unterkante bis zur Oberkante monoton ansteigen. Mit vertikalem Verlauf ist der Verlauf zwischen Unterkante und Oberkante mit Verlaufsrichtung im Wesentlichen senkrecht zu besagten Kanten bezeichnet. Der Winkel zwischen den beiden Oberflächen der Zwischenschicht wird als Keilwinkel bezeichnet. Ist der Keilwinkel nicht konstant, so sind zu seiner Messung an einem Punkt die Tangenten an die Oberflächen heranzuziehen. Der Keilwinkel beträgt bevorzugt von 0,2 mrad bis 1 mrad, besonders bevorzugt von 0,3 mrad bis 0,7 mrad, ganz besonders bevorzugt von 0,4 mrad bis 0,5 mrad. Durch den Keilwinkel der Zwischenschicht sind die Außenscheibe und die Innenscheibe nicht parallel zueinander schließen eben jenen Keilwinkel ein. Im Falle paralleler Scheibenoberflächen würden Bild (erzeugt durch Reflexion des s-polarisierten Strahlungsanteils an der innenraumseitigen Oberfläche der Innenscheibe) und Geisterbild (erzeugt durch Reflexion des s-polarisierten Strahlungsanteils an der außenseitigen Oberfläche der Außenscheibe) versetzt zueinander erscheinen, was für den Betrachter störend ist. Durch den Keilwinkel wird das Geisterbild im Wesentlichen mit dem Bild räumlich überlagert, so dass der Betrachter nur noch ein einziges Bild wahrnimmt oder der Abstand zwischen Bild und Geisterbild zumindest reduziert wird.

Die Zwischenschicht ist zumindest im HUD-Bereich keilförmig oder keilartig ausgebildet, wobei der Keilwinkel geeignet gewählt ist, um die Projektionsbilder, die durch die Reflexionen an der innenraumseitigen Oberfläche der Innenscheibe und an der außenseitigen Oberfläche der Außenscheibe hervorgerufen werden, einander zu überlagern oder zumindest deren Abstand zueinander zu reduzieren.

Der Keilwinkel der Zwischenschicht kann im vertikalen Verlauf konstant sein, was zu einer linearen Dickenänderung der Zwischenschicht führt, wobei die Dicke typischerweise von unten nach oben größer wird. Die Richtungsangabe "von unten nach oben" bezeichnet die Richtung von Unterkante zu Oberkante, also den vertikalen Verlauf. Es können aber auch komplexere Dickenprofile vorliegen, bei denen der Keilwinkel von unten nach oben veränderlich (das heißt im vertikalen Verlauf ortsabhängig) ist, linear oder nicht-linear.

Statt einer Keilfolie in der Zwischenschicht können grundsätzlich auch keilartige Innenscheiben oder Außenscheibe zum Einsatz kommen, um die Reflexionsflächen gegeneinander anzuwinkeln.

In einer zweiten vorteilhaften Ausgestaltung ist auf der innenraumseitigen Oberfläche der Innenscheibe eine Antireflexionsbeschichtung aufgebracht. Dadurch wird das HUD-Bild, welches durch Reflexion der innenraumseitigen Oberfläche der Innenscheibe erzeugt würde, unterdrückt. Das (s-polarisierte) HUD-Bild wird nur durch die Reflexion an der außenseitigen Oberfläche der Außenscheibe erzeugt und es tritt kein oder nur ein merklich intensitätsreduziertes Geisterbild auf.

Die Antireflexionsbeschichtung ist bevorzugt eine Schichtenfolge mit alternierend hohem und niedrigem Brechungsindex, die aufgrund von Interferenzeffekten zu einer Verminderung der Reflexion an der beschichteten Oberfläche führt. Solche Antireflexionsbeschichtungen sind an sich bekannt.

Die Anwesenheit der Antireflexionsbeschichtung wirkt sich auf das Reflexionsverhalten der Verbundscheibe aus. Die Antireflexionsbeschichtung ist bevorzugt zu eingestellt, insbesondere durch geeignete Wahl der Materialien und Schichtdicken, dass die Verbundscheibe mit der elektrisch leitfähigen Beschichtung und der Antireflexionsbeschichtung die erfindungsgemäßen Anforderungen an das Reflexionsverhalten erfüllt, also insbesondere im Spektralbereich von 400 nm bis 650 nm nur ein einziges lokales Reflexionsmaximum für p-polarisierte Strahlung aufweist, welches im Bereich von 510 nm bis 550 nm befindlich ist. Die vorstehend beschriebenen bevorzugten Ausgestaltungen gelten entsprechend.

Die Antireflexionsbeschichtung kann auf verschiedene Weise ausgebildet sein, und die Erfindung ist nicht auf eine bestimmte Schichtenfolge eingeschränkt. Die Antireflexionsbeschichtung umfasst bevorzugt ausgehend vom Substrat eine hochbrechende Schicht mit einem Brechungsindex größer 1,8, darüber eine niedrigbrechende Schicht mit einem Brechungsindex kleiner 1,8, darüber eine weitere hochbrechende Schicht mit einem Brechungsindex größer 1,8 und darüber eine weitere niedrigbrechende Schicht mit einem Brechungsindex kleiner 1,8.

In einer besonders bevorzugten Ausgestaltung, mit der gute Ergebnisse erzielt werden, umfasst die Antireflexionsbeschichtung ausgehend vom Substrat (also der innenraumseitigen Oberfläche der Innenscheibe) folgende Schichten:
- eine Schicht (hochbrechende Schicht) auf Basis von Siliziumnitrid, Zinn-Zink-Oxid, Silizium-Zirkonium-Nitrid oder Titanoxid, bevorzugt, Siliziumnitrid, mit einer Dicke von 15 nm bis 25 nm, bevorzugt von 18 nm bis 22 nm,
- eine Schicht (niedrigbrechende Schicht) auf Basis von Siliziumdioxid mit einer Dicke von 15 nm bis 25 nm, bevorzugt von 18 nm bis 22 nm,
- eine Schicht (hochbrechende Schicht) auf Basis von Siliziumnitrid, Zinn-Zink-Oxid, Silizium-Zirkonium-Nitrid oder Titanoxid, bevorzugt, Siliziumnitrid, mit einer Dicke von 90 nm bis 110 nm, bevorzugt von 95 nm bis 105 nm,
- eine Schicht (niedrigbrechende Schicht) auf Basis von Siliziumdioxid mit einer Dicke von 80 nm bis 100 nm, bevorzugt von 85 nm bis 95 nm.

Auch in der zweiten vorteilhaften Ausgestaltung kann die Zwischenschicht keilförmig ausgebildet sein, beispielsweise um das s-polarisierte Bild (von der Reflexion an der außenseitigen Oberfläche der Außenscheibe) und das p-polarisierte Bild (von der Reflexion an der leitfähigen Beschichtung) miteinander zu überlagern und somit das Auftreten eines Schicht-Geisterbildes für Fahrer ohne polarisationsselektive Sonnenbrille zu verringern. Die Zwischenschicht ist dann zumindest im HUD-Bereich keilförmig oder keilartig ausgebildet, wobei der Keilwinkel geeignet gewählt ist, um die Projektionsbilder, die durch die Reflexionen an der elektrisch leitfähigen Beschichtung und an der außenseitigen Oberfläche der Außenscheibe hervorgerufen werden, einander zu überlagern oder zumindest deren Abstand zueinander zu reduzieren.

Aufgrund des geringeren Abstands der Reflexionsebenen ist der Abstand zwischen Hauptbild und Geisterbild beim Schicht-Geisterbild geringer als beim durch die Scheibenoberflächen erzeugten Geisterbild, wodurch das Schicht-Geisterbild weniger störend auffällt. Es kann daher eine Zwischenschicht eingesetzt werden, deren Dicke im vertikalen Verlauf zwischen der Oberkante und der Unterkante im Wesentlichen konstant ist. Eine solche, nichtkeilförmige Zwischenschicht ist bevorzugt, weil sie deutlich kostengünstiger ist, wodurch die Verbundscheibe wirtschaftlicher hergestellt werden kann. Die Auffälligkeit des Schicht-Geisterbilds liegt bei typischen Verbundscheiben in akzeptablen Grenzen, so dass keine Maßnahmen zu seiner Vermeidung getroffen werden müssen.

Die Außenscheibe und die Innenscheibe sind bevorzugt aus Glas gefertigt, insbesondere aus Kalk-Natron-Glas, was für Fensterscheiben üblich ist. Die Scheiben können grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der Außenscheibe und der Innenscheibe kann breit variieren. Vorzugsweise werden Scheiben mit einer Dicke im Bereich von 0,8 mm bis 5 mm, bevorzugt von 1,4 mm bis 2,5 mm verwendet, beispielsweise die mit den Standarddicken 1,6 mm oder 2,1 mm.

Die Außenscheibe, die Innenscheibe und die thermoplastische Zwischenschicht können klar und farblos, aber auch getönt oder gefärbt sein. Die Gesamttransmission durch das Verbundglas beträgt in einer bevorzugten Ausgestaltung größer 70%. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

Die Verbundscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Verbundscheibe kann aber auch plan sein, beispielsweise wenn es als Scheibe für Busse, Züge oder Traktoren vorgesehen ist.

Die thermoplastische Zwischenschicht enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Zwischenschicht ist typischerweise aus einer thermoplastischen Folie ausgebildet. Die Dicke der Zwischenschicht beträgt bevorzugt von 0,2 mm bis 2 mm, besonders bevorzugt von 0,3 mm bis 1 mm. Wird eine keilförmige Zwischenschicht eingesetzt, so wird die Dicke an der dünnsten Stelle bestimmt, typischerweise an der Unterkante der Verbundscheibe.

Die Verbundscheibe wird kann hergestellt werden durch an sich bekannte Verfahren. Die Außenscheibe und die Innenscheibe werden über die Zwischenschicht miteinander laminiert, beispielsweise durch Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und/oder Druck.

Die elektrisch leitfähige Beschichtung wird bevorzugt durch physikalische Gasphasenabscheidung (PVD) auf die Innenscheibe aufgebracht, besonders bevorzugt durch Kathodenzerstäubung ("Sputtern"), ganz besonders bevorzugt durch magnetfeldunterstütze Kathodenzerstäubung. Gleiches gilt für die Antireflexionsbeschichtung, falls eine solche vorhanden ist. Die Beschichtung oder Beschichtungen werden bevorzugt vor der Lamination auf die Scheiben aufgebracht. Statt die elektrisch leitfähige Beschichtung auf eine Scheibenoberfläche aufzubringen, kann sie grundsätzlich auch auf einer Trägerfolie bereitgestellt werden, die in der Zwischenschicht angeordnet wird.

Soll die Verbundscheibe gebogen sein, so werden die Außenscheibe und die Innenscheibe bevorzugt vor der Lamination und bevorzugt nach etwaiger Beschichtungsprozesse einem Biegeprozess unterzogen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C.

Die Erfindung umfasst außerdem die Verwendung einer erfindungsgemäß ausgebildeten Verbundscheibe als Projektionsfläche einer Projektionsanordnung für ein Head-Up-Display, wobei ein Projektor auf den HUD-Bereich gerichtet ist, dessen Strahlung einen p-polarisierten Anteil von 20% bis 80% aufweist. Die vorstehend beschriebenen bevorzugten Ausgestaltungen gelten für die Verwendung entsprechend. Die Projektionsanordnung wird bevorzugt als HUD in einem Kraftfahrzeug, insbesondere einem Personenkraftwagen oder Lastkraftwagen, eingesetzt.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen Querschnitt durch eine Verbundscheibe als Bestandteil einer gattungsgemäßen Projektionsanordnung,
- Fig. 2: eine Draufsicht auf die Verbundscheibe der Figur 1,
- Fig. 3: einen Querschnitt durch eine erste Ausgestaltung der erfindungsgemäßen Verbundscheibe,
- Fig. 4: einen Querschnitt durch eine zweite Ausgestaltung der erfindungsgemäßen Verbundscheibe,
- Fig. 5: einen Querschnitt durch eine erfindungsgemäße elektrisch leitfähige Beschichtung,
- Fig. 6: einen Querschnitt durch eine erfindungsgemäße Antireflexbeschichtung,
- Fig. 7: Reflexionsspektren einer Verbundscheibe mit einer erfindungsgemäßen elektrisch leitfähigen Beschichtung und einer Verbundscheibe mit einer herkömmlichen elektrisch leitfähigen Beschichtung.

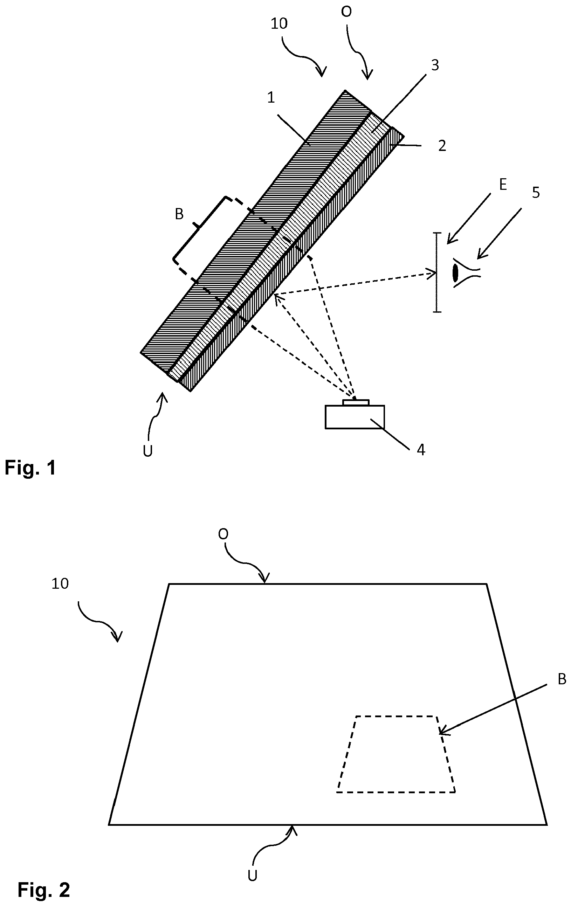

Fig. 1 zeigt eine gattungsgemäße Projektionsanordnung für eine HUD. Die Projektionsanordnung umfasst eine Verbundscheibe 10, insbesondere die Windschutzscheibe eines Personenkraftwagens. Die Projektionsanordnung umfasst außerdem einen Projektor 4, welcher auf einen Bereich B der Verbundscheibe 10 gerichtet ist. In dem Bereich B, der üblicherweise als HUD-Bereich bezeichnet wird, können durch den Projektor 4 Bilder erzeugt werden, welche von einem Betrachter 5 (Fahrzeugfahrer) als virtuelle Bilder auf der von ihm abgewandten Seite der Verbundscheibe 10 wahrgenommen werden, wenn sich seine Augen innerhalb der sogenannten Eyebox E befinden.

Die Verbundscheibe 10 ist aufgebaut aus einer Außenscheibe 1 und einer Innenscheibe 2, die über eine thermoplastische Zwischenschicht 3 miteinander verbunden sind. Ihre Unterkante U ist nach unten in Richtung des Motors des Personenkraftwagens angeordnet, ihre Oberkante O nach oben in Richtung des Dachs. Die Verbundscheibe 10 umfasst außerdem eine nicht dargestellte elektrisch leitfähige Beschichtung, die beispielsweise als IR-reflektierende Beschichtung oder als beheizbare Beschichtung vorgesehen ist. Die Außenscheibe 1 ist in Einbaulage der äußeren Umgebung zugewandt, die Innenscheibe 2 dem Fahrzeuginnenraum.

Der Strahlung des Projektors 4 umfasst eine Mischung aus s-polarisierten und p-polarisierten Anteilen. Da der Projektor 4 die Verbundscheibe 10 mit einem Einfallswinkel von etwa 65° bestrahlt, der nahe dem Brewster-Winkel liegt, werden von den Oberflächen der Verbundscheibe 10 überwiegend die s-polarisierten Strahlungsanteile reflektiert. Die erfindungsgemäße elektrisch leitfähige Beschichtung dagegen ist auf die Reflexion der p-polarisierten Strahlungsanteile optimiert. Ein Betrachter 5 mit einer polarisationselektiven Sonnenbrille, die lediglich p-polarisierte Strahlung passieren lässt, kann daher die HUD-Projektion wahrnehmen. Bei herkömmlichen Projektionsanordnungen, die lediglich mit s-polarisierter Strahlung arbeiten, ist das nicht der Fall. Ein Betrachter 5 ohne Sonnenbrille sieht die Summe aus s-polarisierter und p-polarisierter Strahlung, so dass die Intensität der HUD-Projektion für ihn nicht verringert wird. Das sind große Vorteile der Erfindung.

Fig. 2 zeigt eine Draufsicht auf die Verbundscheibe 10 aus Figur 1. Zu erkennen ist die Oberkante O, die Unterkante U und der HUD-Bereich B.

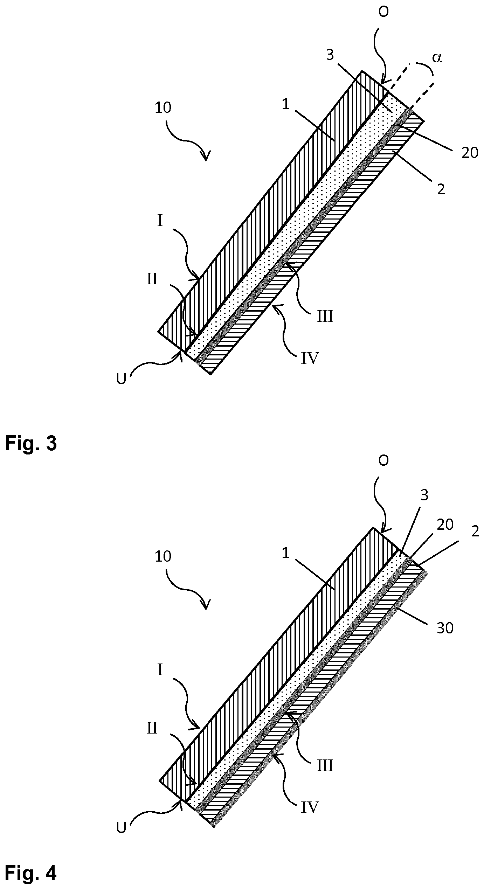

Fig. 3 zeigt eine erste Ausgestaltung einer erfindungsgemäß ausgebildeten Verbundscheibe 10. Die Außenscheibe 1 weist eine außenseitige Oberfläche I auf, die in Einbaulage der äußeren Umgebung zugewandt ist, und eine innenraumseitige Oberfläche II, die in Einbaulage dem Innenraum zugewandt ist. Ebenso weist die Innenscheibe 2 eine außenseitige Oberfläche III auf, die in Einbaulage der äußeren Umgebung zugewandt ist, und eine innenraumseitige Oberfläche IV, die in Einbaulage dem Innenraum zugewandt ist. Die Außenscheibe 1 und die Innenscheibe 2 bestehen beispielsweise aus Kalk-Natron-Glas. Die Außenscheibe 1 weist beispielsweise eine Dicke von 2,1 mm auf, die Innenscheibe 2 eine Dicke von 1,6 mm. Die Zwischenschicht 3 ist beispielsweise aus einer PVB-Folie ausgebildet mit einer Dicke von 0,76 mm.

Die außenseitige Oberfläche III der Innenscheibe 2 ist mit der erfindungsgemäßen elektrisch leitfähigen Beschichtung 20 versehen.

Die s-polarisierten Strahlungsanteile des Projektors 4 werden jeweils teilweise an der innenraumseitigen Oberfläche der Innenscheibe 1 (Primärreflexion) und der außenseitigen Oberfläche der Außenscheibe 1 (Sekundärreflexion) reflektiert. An den Grenzflächen zwischen den Scheiben 1, 2 und der Zwischenschicht 3 tritt kein nennenswerter Brechungsindexübergang auf, so dass sie keine Reflexionsflächen bilden. Die beiden Reflexionen führen bei einer herkömmlichen Verbundscheibe 10 mit parallelen Oberflächen zu zwei zueinander versetzten HUD-Projektionen (einem Hauptbild und einem sogenannten Geisterbild), was für den Betrachter 5 störend ist. Um dies zu vermeiden oder zumindest zu reduzieren, ist die Zwischenschicht 3 keilartig ausgebildet. Die Dicke der Zwischenschicht 3 nimmt dabei im vertikalen Verlauf von der Unterkante U zur Oberkante O stetig zu. Die Dickenzunahme ist in der Figur der Einfachheit halber linear dargestellt, kann aber auch komplexere Profile aufweisen. Der Keilwinkel α beschreibt den Winkel zwischen den beiden Oberflächen der Zwischenschicht und beträgt beispielsweise etwa 0,5 mrad. Durch die keilartige Zwischenschicht, die zu einer gewinkelten Anordnung der beiden Reflexionsflächen I, IV führt, werden Hauptbild und Geisterbild idealerweise genau überlagert, zumindest aber ihr Abstand reduziert.

Fig. 4 zeigt eine weitere Ausgestaltung einer erfindungsgemäß ausgebildeten Verbundscheibe 10. Die Außenscheibe 1 und die Innenscheibe 2 sind genauso ausgestaltet wie in Figur 3. Die elektrisch leitfähige Beschichtung 20 ist auch hier auf der außenseitigen Oberfläche III der Innenscheibe 2 aufgebracht. Die Zwischenschicht 3 ist hier nicht keilförmig ausgebildet, sondern in Form eine Standardfolie mit konstanter Dicke von beispielsweise 0,76 mm. Die Geisterbild-Problematik wird hier auf andere Weise gelöst: die innenraumseitige Oberfläche IV der Innenscheibe 2 ist mit einer Antireflexionsbeschichtung 30 versehen. Diese unterdrückt die Reflexion an der Oberfläche IV, so dass die s-polarisierten Strahlungsanteile nur an der außenseitigen Oberfläche I der Außenscheibe reflektiert werden. Die erfindungsgemäße Antireflexionsbeschichtung 30 ist so eingestellt, dass sie das Reflexionsspektrum der Verbundscheibe 10 für p-polarisierte Strahlung nicht wesentlich verschiebt, so dass die erfindungsgemäßen Eigenschaften hinsichtlich p-polarisierter Strahlung weiterhin erhalten bleiben.

In beiden Ausgestaltungen wird ein Betrachter 5 ohne polarisationsselektive Sonnenbrille neben der an der außenseitigen Oberfläche I erzeugten HUD-Projektion (s-polarisiert) ein sogenanntes Schicht-Geisterbild wahrnehmen (p-polarisiert), dass durch die elektrisch leitfähige Beschichtung 20 erzeugt wird. Der Abstand der beiden Reflexionsebenen ist bei üblichen Scheibendicken aber hinreichend gering, dass das Schicht-Geisterbild in akzeptablen Grenzen liegt. Der Abstand zwischen den beiden Projektionen ließe sich noch weiter reduzieren, wenn man die elektrisch leitfähige Beschichtung 20 auf die innenraumseitige Oberfläche der Außenscheibe II aufbringen würde und/oder eine dünnere Außenscheibe 1 und/oder eine dünnere Zwischenschicht 3 verwenden würde.

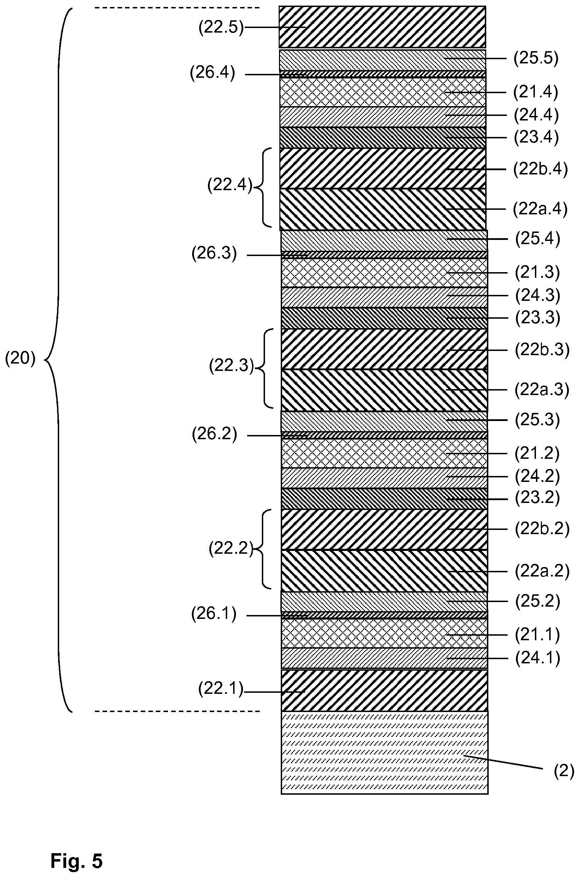

Fig. 5 zeigt die Schichtenfolge einer erfindungsgemäßen elektrisch leitfähigen Beschichtung 20. Die Beschichtung 20 enthält vier elektrisch leitfähige Schichten 21 (21.1, 21.2, 21.3, 21.4).

Jede elektrisch leitfähige Schicht 21 ist jeweils zwischen zwei von insgesamt fünf Entspiegelungsschichten 22 (22.1, 22.2, 22.3, 22.4, 22.5) angeordnet. Die Entspiegelungsschichten 22.2, 22.3, 22.4, die zwischen zwei elektrisch leitfähigen Schichten 21 angeordnet sind, sind jeweils unterteilt in eine dielektrische Schicht 22a (22a.2, 22a.3, 22a.4) und eine optisch hochbrechende Schicht 22b (22b.2, 22b.3, 22b.4). Die Beschichtung 20 enthält außerdem drei Glättungsschichten 23 (23.2, 23.3, 23.4), vier ersten Anpassungsschichten 24 (24.1, 24.2, 24.3, 24.4), vier zweite Anpassungsschichten 25 (25.2, 25.3, 25.4, 25.5) und vier Blockerschichten 26 (26.1, 26.2, 26.3, 26.4).

Die Schichtenabfolge ist schematisch der Figur zu entnehmen. Die Schichtenfolge einer Verbundscheibe 10 mit der Beschichtung 20 auf der außenseitigen Oberfläche III der Innenscheibe 2 ist außerdem, zusammen mit den Materialien und Schichtdicken der Einzelschichten, in Tabelle 1 dargestellt (Beispiel). Tabelle 1 zeigt außerdem die Schichtenfolge einer elektrisch leitfähigen Beschichtung, wie sie aktuell bereits in Verwendung ist (Vergleichsbeispiel). Es ist zu erkennen, dass die erfindungsgemäßen Reflexionseigenschaften der Beschichtung 20 durch die geeignete Optimierung der Schichtdicken der Einzelschichten erreicht wurde.

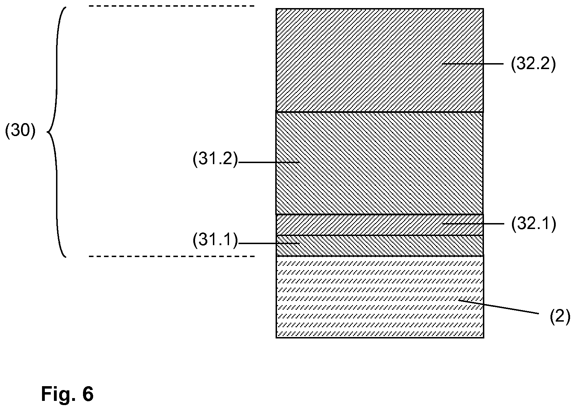

Fig. 6 zeigt die Schichtenfolge einer Antireflexionsbeschichtung 30 im Sinne der Erfindung, umfassend zwei hochbrechende Schichten 31 (31.1, 31.2) und zwei niedrigbrechende Schichten 32 (32.1, 32.2). Die Schichtenabfolge ist schematisch der Figur zu entnehmen. Die Schichtenfolge einer Verbundscheibe 10 mit der elektrisch leitfähigen Beschichtung 20 auf der außenseitigen Oberfläche III der Innenscheibe 2 und der Antireflexionsbeschichtung 30 auf der innenraumseitigen Oberfläche IV der Innenscheibe 2 ist außerdem, zusammen mit den Materialien und Schichtdicken der Einzelschichten, in Tabelle 2 dargestellt.

**Tabelle 1**

| Material | Bezugszeichen | | | Schichtdicke | |
|---|---|---|---|---|---|
| | | | | Beispiel | Vergleichsbeispiel |
| Glas | 1 | | | 2,1 mm | 2,1 mm |
| PVB | 3 | | | 0,76 mm | 0,76 mm |
| SiZrN | 20 | 22.5 | | 12,3 nm | 25,2 nm |
| ZnO | | 25.5 | | 10,0 nm | 10,0 nm |
| NiCr | | 26.4 | | 0,2 nm | 0,2 nm |
| **Ag** | | 21.4 | | 5,3 nm | 14,1 nm |
| ZnO | | 24.4 | | 10,0 nm | 10,0 nm |
| SnZnO:Sb | | 23.4 | | 7,0 nm | 7,0 nm |
| SiZrN | | 22b.4 | 22.4 | 15,0 | 22,9 nm |
| SiN | | 22a.4 | | 5,2 nm | 29,8 nm |
| ZnO | | 25.4 | | 10,0 nm | 10,0 nm |
| NiCr | | 26.3 | | 0,2 nm | 0,2 nm |
| **Ag** | | 21.3 | | 9,6 nm | 14,2 nm |
| ZnO | | 24.3 | | 10,0 nm | 10,0 nm |
| SnZnO:Sb | | 23.3 | | 7,0 nm | 7,0 nm |
| SiZrN | | 22b.3 | 22.3 | 15,0 nm | 20,1 nm |
| SiN | | 22a.3 | | 35,1 nm | 29,6 nm |
| ZnO | | 25.3 | | 10,0 nm | 10,0 nm |
| NiCr | | 26.2 | | 0,2 nm | 0,2 nm |
| **Ag** | | 21.2 | | 12,4 nm | 17,1 nm |
| ZnO | | 24.2 | | 10,0 nm | 10,0 nm |
| SnZnO:Sb | | 23.2 | | 7,0 nm | 7,0 nm |
| SiZrN | | 22b.2 | 22.2 | 15,0 nm | 19,4 nm |
| SiN | | 22a.2 | | 15,5 nm | 34,1 nm |
| ZnO | | 25.2 | | 10,0 nm | 10,0 nm |
| NiCr | | 26.1 | | 0,2 nm | 0,2 nm |
| **Ag** | | 21.1 | | 9,5 nm | 11,7 nm |
| ZnO | | 24.1 | | 10,0 nm | 10,0 nm |
| SiN | | 22.1 | | 21,2 nm | 28,8 nm |
| Glas | 2 | | | 1,6 mm | 1,6 nm |

**Tabelle 2**

| Material | Bezugszeichen | | Schichtdicke |
|---|---|---|---|
| SiO | 30 | 32.2 | 92,7 nm |
| SiN | | 31.2 | 102,2 nm |
| SiO | | 32.1 | 20,5 nm |
| SiN | | 31.1 | 19,9 nm |
| Glas | 2 | | 1,6 mm |
| | 20 | | (siehe Tabelle 1) |
| PVB | 3 | | 0,76 mm |
| Glas | 1 | | 2,1 mm |

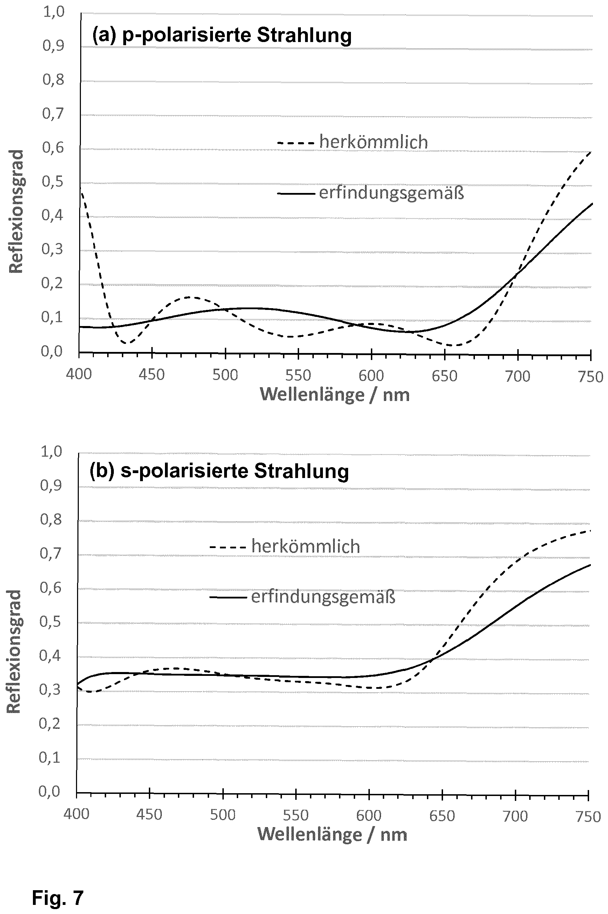

Fig. 7 zeigt das Reflexionsspektrum einer Verbundscheibe 10 mit einer herkömmlichen leitfähigen Beschichtung 20 gemäß dem Vergleichsbeispiel und einer erfindungsgemäßen leitfähigen Beschichtung 20 gemäß dem Beispiel (vgl. Tabelle 1) für p-polarisierte Strahlung (Teil a) und für s-polarisierte Strahlung (Teil b). Die Spektren wurden innenraumseitig gemessen unter einem Einfallswinkel von 65°, bildet also das Reflexionsverhalten für den HUD-Projektor nach.

Die herkömmliche Beschichtung gemäß dem Vergleichsbeispiel, wie sie bislang gebräuchlich war, weist im Spektralbereich von 400 nm bis 650 nm für p-polarisierte Strahlung zwei lokale Reflexionsmaxima auf: bei 476 nm und bei 600 nm. Die Differenz zwischen dem Reflexionsgrad des lokalen Reflexionsmaximums und dem minimal auftretenden Reflexionsgrad für p-polarisierte Strahlung im Spektralbereich von 400 nm bis 650 nm beträgt deutlich mehr als 10%.

Die erfindungsgemäße Beschichtung gemäß dem Beispiel weist dagegen im Spektralbereich von 400 nm bis 650 nm für p-polarisierte Strahlung nur ein einziges lokales Reflexionsmaximum auf. Das lokale Reflexionsmaximum ist bei 516 nm befindlich, also im grünen Spektralbereich, für den das menschliche Auge besonders empfindlich ist. Die Differenz zwischen dem Reflexionsgrad des lokalen Reflexionsmaximums und dem minimal auftretenden Reflexionsgrad für p-polarisierte Strahlung im Spektralbereich von 400 nm bis 650 nm beträgt lediglich 6,7%.

Auch für s-polarisierte Strahlung ist das Reflexionsspektrum der erfindungsgemäßen Beschichtung deutlich flacher als das der herkömmlichen Beschichtung im Spektralbereich von 450 nm bis 600 nm. Die Differenz zwischen dem maximal auftretenden Reflexionsgrad und dem Mittelwert beträgt 0,4 %, die Differenz zwischen dem minimal auftretenden Reflexionsgrad und dem Mittelwert 0,3 %.

Durch die erfindungsgemäße Ausgestaltung der Beschichtung des Beispiels wird ein HUD-Bild mit neutraler Farbgebung erzeugt. Zudem können die relativen Anteile von s-polarisierter und p-polarisierter Strahlung frei gewählt werden, ohne dass dies mit einer Farbverschiebung oder anderen unerwünschten Effekten verbunden wäre. Die Strahlungsanteile sind also nach den Erfordernissen im Einzelfall einstellbar, ohne dass dem Fachmann durch die Beschichtung Grenzen gesetzt wären. Es kann ein Verhältnis eingestellt werden, dass eine optimale Intensität der HUD-Projektion für Fahrer mit und ohne polarisationsselektive Sonnenbrille erreicht wird.

In Tabelle 3 ist der Gesamtreflexionsgrad bei verschiedenen Polarisationsanteilen der Projektorstrahlung dargestellt, einerseits für eine herkömmliche Verbundscheibe (Beschichtung 20 wie in Tabelle 1 unter Vergleichsbeispiel angegeben, keine Antireflexbeschichtung 30), andererseits für eine erfindungsgemäße Verbundscheibe (Beschichtung 20 wie in Tabelle 1 unter Beispiel angegeben, Aufbau mit Antireflexbeschichtung 30 wie in Tabelle 2 angegeben). Es ist deutlich zu erkennen, dass der Reflexionsgrad für p-polarisierte Strahlung (wahrgenommen durch einen Betrachter mit polarisationsselektiver Sonnenbrille) bei jedem beliebigen Polarisationsverhältnis deutlich gesteigert wird. Auch der Reflexionsgrad für s- und p-polarisierte Strahlung (wahrgenommen durch einen Betrachter ohne polarisationsselektiver Sonnenbrille) ist ab einem p-Polarisationsanteil von 50% gesteigert. Insgesamt resultiert ein intensitätsstärkeres Bild.

**Tabelle 3**

| **Strahlungsanteile der Projektorstrahlung** | | **Gesamtreflexionsgrad /%** | | | |
|---|---|---|---|---|---|
| | | **Vergleichsbeispiel** | | **Beispiel** | |
| **p** | **s** | s+p | p | S+P | p |
| 0 | 100 | 33,1 | 0 | 26,4 | 0,0 |
| 10 | 90 | 30,5 | 0,7 | 25,4 | 1,6 |
| 20 | 80 | 27,9 | 1,4 | 24,4 | 3,3 |
| 30 | 70 | 25,3 | 2,1 | 23,4 | 4,9 |
| 40 | 60 | 22,7 | 2,8 | 22,4 | 6,6 |
| 50 | 50 | 20,1 | 3,5 | 21,4 | 8,2 |
| 60 | 40 | 17,4 | 4,2 | 20,4 | 9,8 |
| 70 | 30 | 14,8 | 4,9 | 19,4 | 11,5 |
| 80 | 20 | 12,2 | 5,6 | 18,4 | 13,1 |
| 90 | 10 | 9,6 | 6,3 | 17,4 | 14,8 |
| 100 | 0 | 7,0 | 7,0 | 16,4 | 16,4 |

### Bezugszeichenliste:

(10) Verbundscheibe

(1) Außenscheibe
(2) Innenscheibe
(3) thermoplastische Zwischenschicht
(4) Projektor
(5) Betrachter/ Fahrzeugfahrer

(20) elektrisch leitfähige Beschichtung
(21) elektrisch leitfähige Schicht
(21.1), (21.2), (21.3), (21.4) 1., 2., 3., 4. elektrisch leitfähige Schicht
(22) Entspiegelungsschicht
(22.1), (22.2), (22.3), (22.4), (22.5) 1., 2., 3., 4., 5. Entspiegelungsschicht
(22a) dielektrische Schicht der Entspiegelungsschicht 4
(22a.2), (22a.3), (22a.4) 1., 2., 3. dielektrische Schicht
(22b) optisch hochbrechende Schicht der Entspiegelungsschicht 4
(22b.2), (22b.3), (22b.4) 1., 2., 3. optisch hochbrechende Schicht
(23) Glättungsschicht
(23.2), (23.3), (23.4) 1., 2., 3. Glättungsschicht
(24) erste Anpassungsschicht
(24.1), (24.2), (24.3), (24.4) 1., 2., 3., 4. erste Anpassungsschicht
(25) zweite Anpassungsschicht
(25.2), (25.3), (25.4), (25.5) 1., 2., 3., 4. zweite Anpassungsschicht
(26) Blockerschicht
(26.1), (26.2), (26.3), (26.4) 1., 2., 3., 4. Blockerschicht

(30) Antireflexionsbeschichtung
(31) hochbrechende Schicht der Antireflexionsbeschichtung 30
(31.1), (31.2) 1., 2. hochbrechende Schicht
(32) niedrigbrechende Schicht der Antireflexionsbeschichtung 30
(32.1), (32.2) 1., 2. niedrigbrechende Schicht

(O) Oberkante der Verbundscheibe 10
(U) Unterkante der Verbundscheibe 10
(B) HUD-Bereich der Verbundscheibe 10
(E) Eyebox

(I) außenseitige, von der Zwischenschicht 3 abgewandte Oberfläche der Außenscheibe 1
(II) innenraumseitige, zur Zwischenschicht 3 hingewandte Oberfläche der Außenscheibe 1
(III) außenseitige, zur Zwischenschicht 3 hingewandte Oberfläche der Innenscheibe 2
(IV) innenraumseitige, von der Zwischenschicht 3 abgewandte Oberfläche der Innenscheibe 2

α Keilwinkel

## Patentansprüche

1. Projektionsanordnung für ein Head-Up-Display (HUD), mindestens umfassend
- eine Verbundscheibe (10), umfassend eine Außenscheibe (1) und eine Innenscheibe (2), die über eine thermoplastische Zwischenschicht (3) miteinander verbunden sind, mit einer Oberkante (O) und einer Unterkante (U) und einem HUD-Bereich (B);
- eine elektrisch leitfähige Beschichtung (20) auf der zur Zwischenschicht (3) hingewandten Oberfläche (II, III) der Außenscheibe (1) oder der Innenscheibe (2) oder innerhalb der Zwischenschicht (3); und
- einen Projektor (4), der auf den HUD-Bereich (B) gerichtet ist;
wobei die Strahlung des Projektors (4) einen p-polarisierten Anteil aufweist, wobei der Anteil von p-polarisierter Strahlung an der Gesamtstrahlung des Projektors (4) von 20% bis 80% beträgt, und
wobei die elektrisch leitfähige Beschichtung (20) im Spektralbereich von 400 nm bis 650 nm nur ein einziges lokales Reflexionsmaximum für p-polarisierte Strahlung aufweist, welches im Bereich von 510 nm bis 550 nm befindlich ist.

2. Projektionsanordnung nach Anspruch 1, wobei im Spektralbereich von 400 nm bis 650 nm die Differenz zwischen dem Reflexionsgrad des lokalen Reflexionsmaximums und dem minimal auftretenden Reflexionsgrad für p-polarisierte Strahlung höchstens 10% beträgt, bevorzugt höchstens 8%.

3. Projektionsanordnung nach Anspruch 1 oder 2, wobei der Reflexionsgrad für s-polarisierte Strahlung im Spektralbereich von 450 nm bis 600 nm im Wesentlichen konstant ist, so dass die Differenz zwischen dem maximal auftretenden Reflexionsgrad und dem Mittelwert sowie die Differenz zwischen dem minimal auftretenden Reflexionsgrad und dem Mittelwert höchstens 5% betragen, bevorzugt höchstens 3%, besonders bevorzugt höchstens 1%.

4. Projektionsanordnung nach einem der Ansprüche 1 bis 3, wobei der Anteil von p-polarisierter Strahlung an der Gesamtstrahlung des Projektors (4) von 50% bis 80% beträgt.

5. Projektionsanordnung nach einem der Ansprüche 1 bis 4, wobei die elektrisch leitfähige Beschichtung (20) mindestens vier elektrische leitfähige Schichten (21) umfasst, welche jeweils zwischen zwei dielektrischen Schichten oder Schichtenfolgen angeordnet sind.

6. Projektionsanordnung nach Anspruch 5, wobei die elektrisch leitfähigen Schichten (21) auf Basis von Silber ausgebildet sind, und jeweils eine Schichtdicke von 5 bis 15 nm aufweisen, wobei die Gesamtschichtdicke aller elektrisch leitfähigen Schichten (21) von 20 nm bis 50 nm beträgt.

7. Projektionsanordnung nach Anspruch 5 oder 6, wobei jede dielektrische Schichtenfolge eine Entspiegelungsschicht (22) umfasst und wobei
- die Entspiegelungsschicht (22.1) unterhalb der ersten elektrisch leitfähigen Schicht (21.1) eine Dicke von 15 nm bis 25 nm aufweist,
- die Entspiegelungsschicht (22.2) zwischen der ersten und der zweiten elektrisch leitfähigen Schicht (21.1, 21.2) eine Dicke von 25 bis 35 nm,
- die Entspiegelungsschicht (22.3) zwischen der zweiten und der dritten elektrisch leitfähigen Schicht (21.2, 21.3) eine Dicke von 45 nm bis 55 nm,
- die Entspiegelungsschicht (22.4) zwischen der dritten und der vierten elektrisch leitfähigen Schicht (21.3, 21.4) eine Dicke von 15 nm bis 25 nm, und
- die Entspiegelungsschicht (22.5) oberhalb der vierten elektrisch leitfähigen Schicht (21.4) eine Dicke von 8 nm bis 18 nm.

8. Projektionsanordnung nach einem der Ansprüche 5 bis 7, wobei alle Entspiegelungsschichten (22.2, 22.3, 22.4), die zwischen zwei elektrisch leitfähigen Schichten (21) angeordnet sind, unterteilt sind in eine dielektrische Schicht (22a) mit einem Brechungsindex kleiner 2,1, bevorzugt auf Basis von Siliziumnitrid, und eine optisch hochbrechende Schicht (22b) mit einem Brechungsindex größer oder gleich 2,1, bevorzugt auf Basis eines Silizium-Metall-Mischnitrids wie Siliziumzirkoniumnitrid oder Siliziumhafniumnitrid.

9. Projektionsanordnung nach einem der Ansprüche 1 bis 8, wobei die Dicke der Zwischenschicht (3) im vertikalen Verlauf zwischen der Oberkante (O) und der Unterkante (U) zumindest im HUD-Bereich (B) veränderlich ist mit einem Keilwinkel (α), der bevorzugt geeignet gewählt ist, um die Reflexionen an der innenraumseitigen Oberfläche (IV) der Innenscheibe (2) und an der außenseitigen Oberfläche (I) der Außenscheibe (1) einander zu überlagern oder zumindest deren Abstand zueinander zu reduzieren.

10. Projektionsanordnung nach einem der Ansprüche 1 bis 8, wobei auf der von der Zwischenschicht (3) abgewandten Oberfläche (IV) der Innenscheibe (2) eine Antireflexionsbeschichtung (30) aufgebracht ist.

11. Projektionsanordnung nach Anspruch 10, wobei die Dicke der Zwischenschicht (3) im vertikalen Verlauf zwischen der Oberkante (O) und der Unterkante (U) im Wesentlichen konstant ist.

12. Projektionsanordnung nach Anspruch 10, wobei die Dicke der Zwischenschicht (3) im vertikalen Verlauf zwischen der Oberkante (O) und der Unterkante (U) zumindest im HUD-Bereich (B) veränderlich ist mit einem Keilwinkel (α), der bevorzugt geeignet gewählt ist, um die Reflexionen an der elektrisch leitfähigen Beschichtung (20) und an der außenseitigen Oberfläche (I) der Außenscheibe (1) einander zu überlagern oder zumindest deren Abstand zueinander zu reduzieren.

13. Projektionsanordnung nach einem der Ansprüche 10 bis 12, wobei die Antireflexionsbeschichtung (30) ausgehend von der Innenscheibe (2) folgende Schichten umfasst:
- eine hochbrechende Schicht (31.1) auf Basis von Siliziumnitrid mit einer Dicke von 15 nm bis 25 nm, bevorzugt von 18 nm bis 22 nm,
- eine niedrigbrechende Schicht (32.1) auf Basis von Siliziumdioxid mit einer Dicke von 15 nm bis 25 nm, bevorzugt von 18 nm bis 22 nm,
- eine hochbrechende Schicht (31.2) auf Basis von Siliziumnitrid mit einer Dicke von 90 nm bis 110 nm, bevorzugt von 95 nm bis 105 nm,
- eine niedrigbrechende Schicht (32.2) auf Basis von Siliziumdioxid mit einer Dicke von 80 nm bis 100 nm, bevorzugt von 85 nm bis 95 nm.

14. Projektionsanordnung nach einem der Ansprüche 1 bis 13, wobei die Strahlung des Projektors (4) mit einem Einfallswinkel von 60° bis 70° auf die Verbundscheibe (10) trifft.

15. Verwendung einer Verbundscheibe (10), umfassend eine Außenscheibe (1) und eine Innenscheibe (2), die über eine thermoplastische Zwischenschicht (3) miteinander verbunden sind, mit einer Oberkante (O) und einer Unterkante (U) und einem HUD-Bereich (B) und mit einer elektrisch leitfähigen Beschichtung (20) auf der zur Zwischenschicht (4) hingewandten Oberfläche (II, III) der Außenscheibe (1) oder der Innenscheibe (2) oder innerhalb der Zwischenschicht (3),
als Projektionsfläche einer Projektionsanordnung für ein Head-Up-Display (HUD), wobei ein Projektor (4) auf den HUD-Bereich (B) gerichtet ist, dessen Strahlung einen p-polarisierten Anteil aufweist, wobei der Anteil von p-polarisierter Strahlung an der Gesamtstrahlung des Projektors (4) von 20% bis 80% beträgt, und
wobei die elektrisch leitfähige Beschichtung (20) im Spektralbereich von 400 nm bis 650 nm nur ein einziges lokales Reflexionsmaximum für p-polarisierte Strahlung aufweist, welches im Bereich von 510 nm bis 550 nm befindlich ist.

## Claims

1. Projection arrangement for a head-up display (HUD), at least comprising
- a composite pane (10), comprising an outer pane (1) and an inner pane (2), which are joined to one another via a thermoplastic intermediate layer (3), having an upper edge (O) and a lower edge (U) and an HUD region (B);
- an electrically conductive coating (20) on the surface (II, III) of the outer pane (1) or the inner pane (2) facing the intermediate layer (3) or within the intermediate layer (3); and
- a projector (4) that is aimed at the HUD region (B);
wherein the light of the projector (4) has a p-polarised portion, wherein the proportion of p-polarised light in the total light of the projector (4) is from 20% to 80%, and
wherein the electrically conductive coating (20) has, in the spectral range from 400 nm to 650 nm, only a single local reflection maximum for p-polarised light, with this maximum situated in the range from 510 nm to 550 nm.

2. Projection arrangement according to claim 1, wherein in the spectral range from 400 nm to 650 nm, the difference between the reflectance of the local reflection maximum and the minimally occurring reflectance for p-polarised light is at most 10%, preferably at most 8%.

3. Projection arrangement according to claim 1 or 2, wherein the reflectance for s-polarised light in the spectral range from 450 nm to 600 nm is substantially constant such that the difference between the maximally occurring reflectance and the mean as well as the difference between the minimally occurring reflectance and the mean are at most 5%, preferably at most 3%, particularly preferably at most 1%.

4. Projection arrangement according to one of claims 1 through 3, wherein the proportion of p-polarised light in the total light of the projector (4) is from 50% to 80%.

5. Projection arrangement according to one of claims 1 through 4, wherein the electrically conductive coating (20) includes at least four electrically conductive layers (21), which are in each case arranged between two dielectric layers or layer sequences.

6. Projection arrangement according to claim 5, wherein wherein the electrically conductive layers (21) are based on silver and have, in each case, a layer thickness from 5 to 15 nm, wherein the total layer thickness of all electrically conductive layers (21) is from 20 nm to 50 nm.

7. Projection arrangement according to claim 5 or 6, wherein each dielectric layer sequence includes an anti-reflective layer (22), and wherein
- the anti-reflective layer (22.1) below the first electrically conductive layer (21.1) has a thickness from 15 nm to 25 nm,
- the anti-reflective layer (22.2) between the first and the second electrically conductive layer (21.1, 21.2) has a thickness from 25 to 35 nm,
- the anti-reflective layer (22.3) between the second and the third electrically conductive layer (21.2, 21.3) has a thickness from 45 nm to 55 nm,
- the anti-reflective layer (22.4) between the third and the fourth electrically conductive layer (21.3, 21.4) has a thickness from 15 nm to 25 nm, and
- the anti-reflective layer (22.5) above the fourth electrically conductive layer (21.4) has a thickness from 8 nm to 18 nm.

8. Projection arrangement according to one of claims 5 through 7, wherein all anti-reflective layers (22.2, 22.3, 22.4) that are arranged between two electrically conductive layers (21) are divided into a dielectric layer (22a) having a refractive index smaller than 2.1, preferably based on silicon nitride, and an optically high refractive layer (22b) having a refractive index greater than or equal to 2.1, preferably based on a mixed silicon/metal nitride such as silicon-zirconium nitride or silicon-hafnium nitride.

9. Projection arrangement according to one of claims 1 through 8, wherein the thickness of the intermediate layer (3) is variable with a wedge angle (α) in its vertical course between the upper edge (O) and the lower edge (U) at least in the HUD region (B), which wedge angle is preferably suitably selected for superimposing the reflections at the interior-side surface (IV) of the inner pane (2) and at the exterior-side surface (I) of the outer pane (1) or for at least reducing the distance between them.

10. Projection arrangement according to one of claims 1 through 8, wherein an anti-reflective coating (30) is applied on the surface (IV) of the inner pane (2) facing away from the intermediate layer (3).

11. Projection arrangement according to claim 10, wherein the thickness of the intermediate layer (3) is substantially constant in the vertical course between the upper edge (O) and the lower edge (U).

12. Projection arrangement according to claim 10, wherein the thickness of the intermediate layer (3) is variable with a wedge angle (α) in its vertical course between the upper edge (O) and the lower edge (U) at least in the HUD region (B), which wedge angle is preferably suitably selected for superimposing the reflections at the electrically conductive coating (20) and at the exterior-side surface (I) of the outer pane (1) or for at least reducing the distance between them.

13. Projection arrangement according to one of claims 10 through 12, wherein the anti-reflective coating (30) includes the following layers, starting from the inner pane (2):
- a high refractive layer (31.1) based on silicon nitride with a thickness from 15 nm to 25 nm, preferably from 18 nm to 22 nm,
- a low refractive layer (32.1) based on silicon dioxide with a thickness from 15 nm to 25 nm, preferably from 18 nm to 22 nm,
- a high refractive layer (31.2) based on silicon nitride with a thickness from 90 nm to 110 nm, preferably from 95 nm to 105 nm,
- a low refractive layer (32.2) based on silicon dioxide with a thickness from 80 nm to 100 nm, preferably from 85 nm to 95 nm.

14. Projection arrangement according to one of claims 1 through 13, wherein the light of the projector (4) strikes the composite pane (10) with an angle of incidence from 60° to 70°.

15. Use of a composite pane (10), comprising an outer pane (1) and an inner pane (2), which are joined to one another via a thermoplastic intermediate layer (3), having an upper edge (O) and a lower edge (U) and an HUD region (B) and having an electrically conductive coating (20) on the surface (II, III) of the outer pane (1) or the inner pane (2) facing the intermediate layer (3) or provided within the intermediate layer (3),
as a projection surface of of a projection arrangement for a head-up display (HUD), wherein a projector (4) is aimed at the HUD region (B), whose light has a p-polarised portion, wherein the proportion of p-polarised light in the total light of the projector (4) is from 20% to 80%, and
wherein the electrically conductive coating (20) has, in the spectral range from 400 nm to 650 nm, only a single local reflection maximum for p-polarised light, with this maximum situated in the range from 510 nm to 550 nm.

## Revendications

1. - Dispositif de projection pour un affichage tête haute (HUD), comportant au moins :
- une vitre feuilletée (10), comportant une vitre extérieure (1) et une vitre intérieure (2), qui sont reliées entre elles par une couche intermédiaire thermoplastique (3), avec un bord supérieur (O) et un bord inférieur (U) et une zone HUD (B) ;
- un revêtement électriquement conducteur (20) sur la surface (II, III), tournée vers la couche intermédiaire (3) de la vitre extérieure (1) ou de la vitre intérieure (2) ou à l'intérieur de la couche intermédiaire (3) ; et
- un projecteur (4), qui est dirigé sur la zone HUD (B) ; dans lequel le rayonnement du projecteur (4) présente une proportion polarisée p, la proportion de rayonnement polarisé p par rapport au rayonnement total du projecteur (4) s'élevant à 20 % à 80 % ; et
dans lequel le revêtement électriquement conducteur (20) présente, dans le domaine spectral de 400 nm à 650 nm, seulement un unique maximum de réflexion local pour un rayonnement polarisé p, lequel se trouve dans le domaine de 510 nm à 550 nm.

2. - Dispositif de projection selon la revendication 1, dans lequel, dans le domaine spectral de 400 nm à 650 nm, la différence entre le degré de réflexion du maximum de réflexion local et le degré de réflexion se présentant de façon minimale pour un rayonnement polarisé p s'élève au plus à 10 %, de préférence au plus à 8 %.

3. - Dispositif de projection selon l'une des revendications 1 ou 2, dans lequel le degré de réflexion pour un rayonnement polarisé s dans le domaine spectral de 450 nm à 600 nm est sensiblement constant, de telle sorte que la différence entre le degré de réflexion se présentant de façon maximale et la valeur moyenne ainsi que la différence entre le degré de réflexion se présentant de façon minimale et la valeur moyenne s'élèvent au plus à 5 %, de préférence au plus à 3 %, de manière particulièrement préférée au plus à 1 %.

4. - Dispositif de projection selon l'une des revendications 1 à 3, dans lequel la proportion de rayonnement polarisé p par rapport au rayonnement total du projecteur (4) s'élève à 50 % à 80 %.

5. - Dispositif de projection selon l'une des revendications 1 à 4, dans lequel le revêtement électriquement conducteur (20) comporte au moins quatre couches électriquement conductrices (21), lesquelles sont disposées chacune entre deux couches ou successions de couches diélectriques.

6. - Dispositif de projection selon la revendication 5, dans lequel les couches électriquement conductrices (21) sont formées à base d'argent et présentent chacune une épaisseur de couche de 5 à 15 nm, l'épaisseur de couche totale de toutes les couches électriquement conductrices (21) s'élevant à 20 nm à 50 nm.

7. - Dispositif de projection selon l'une des revendications 5 ou 6, dans lequel chaque succession de couches diélectriques comporte une couche antireflet (22) et dans lequel :
- la couche antireflet (22.1) sous la première couche électriquement conductrice (21.1) présente une épaisseur de 15 nm à 25 nm ;
- la couche antireflet (22.2) entre la première et la deuxième couche électriquement conductrice (21.1, 21.2) présente une épaisseur de 25 à 35 nm ;
- la couche antireflet (22.3) entre la deuxième et la troisième couche électriquement conductrice (21.2, 21.3) présente une épaisseur de 45 nm à 55 nm ;
- la couche antireflet (22.4) entre la troisième et la quatrième couche électriquement conductrice (21.3, 21.4) présente une épaisseur de 15 nm à 25 nm ; et
- la couche antireflet (22.5) au-dessus de la quatrième couche électriquement conductrice (21.4) présente une épaisseur de 8 nm à 18 nm.

8. - Dispositif de projection selon l'une des revendications 5 à 7, dans lequel toutes les couches antireflet (22.2, 22.3, 22.4), qui sont disposées entre deux couches électriquement conductrices (21), sont divisées en une couche diélectrique (22a) ayant un indice de réfraction inférieur à 2,1, de préférence à base de nitrure de silicium, et une couche à haut indice de réfraction optique (22b) ayant un indice de réfraction supérieur ou égal à 2,1, de préférence à base d'un nitrure mixte de silicium-métal, tel que le nitrure de silicium-zirconium ou le nitrure de silicium-hafnium.

9. - Dispositif de projection selon l'une des revendications 1 à 8, dans lequel l'épaisseur de la couche intermédiaire (3) dans la direction verticale entre le bord supérieur (O) et le bord inférieur (U) est variable au moins dans la zone HUD (B) avec un angle de coin (α), qui est choisi de façon préférentielle pour superposer les réflexions sur la surface côté espace intérieur (IV) de la vitre intérieure (2) et sur la surface côté extérieur (I) de la vitre extérieure (1) ou au moins pour réduire leur distance l'une par rapport à l'autre.

10. - Dispositif de projection selon l'une des revendications 1 à 8, dans lequel un revêtement antiréfléchissant (30) est appliqué sur la surface (IV) de la vitre intérieure (2) qui est opposée à la couche intermédiaire (3).

11. - Dispositif de projection selon la revendication 10, dans lequel l'épaisseur de la couche intermédiaire (3) est sensiblement constante dans la direction verticale entre le bord supérieur (O) et le bord inférieur (U).

12. - Dispositif de projection selon la revendication 10, dans lequel l'épaisseur de la couche intermédiaire (3) dans la direction verticale entre le bord supérieur (O) et le bord inférieur (U) est variable au moins dans la zone HUD (B) avec un angle de coin (α), qui est choisi de façon préférentielle pour superposer les réflexions sur le revêtement électriquement conducteur (20) et sur la surface côté extérieur (I) de la vitre extérieure (1) ou au moins pour réduire leur distance l'une par rapport à l'autre.

13. - Dispositif de projection selon l'une des revendications 10 à 12, dans lequel le revêtement antiréfléchissant (30) comporte, en partant de la vitre intérieure (2), les couches suivantes :
- une couche à haut indice de réfraction (31.1) à base de nitrure de silicium ayant une épaisseur de 15 nm à 25 nm, de préférence de 18 nm à 22 nm ;
- une couche à bas indice de réfraction (32.1) à base de dioxyde de silicium ayant une épaisseur de 15 nm à 25 nm, de préférence de 18 nm à 22 nm ;
- une couche à haut indice de réfraction (31.2) à base de nitrure de silicium ayant une épaisseur de 90 nm à 110 nm, de préférence de 95 nm à 105 nm ;
- une couche à bas indice de réfraction (32.2) à base de dioxyde de silicium ayant une épaisseur de 80 nm à 100 nm, de préférence de 85 nm à 95 nm.

14. - Dispositif de projection selon l'une des revendications 1 à 13, dans lequel le rayonnement du projecteur (4) rencontre la vitre feuilletée (10) avec un angle d'incidence de 60° à 70°.

15. - Utilisation d'une vitre feuilletée (10), comportant une vitre extérieure (1) et une vitre intérieure (2), qui sont reliées entre elles par une couche intermédiaire thermoplastique (3), avec un bord supérieur (O) et un bord inférieur (U) et une zone HUD (B) et avec un revêtement électriquement conducteur (20) sur la surface (II, III) de la vitre extérieure (1) ou de la vitre intérieure (2) tournée vers la couche intermédiaire (4) ou à l'intérieur de la couche intermédiaire (3),
en tant que surface de projection d'un dispositif de projection pour un affichage tête haute (HUD),
un projecteur (4) étant dirigé sur la zone HUD (B), dont le rayonnement présente une proportion polarisée p, la proportion de rayonnement polarisé p par rapport au rayonnement total du projecteur (4) s'élevant à 20 % à 80 %, et
le revêtement électriquement conducteur (20) présentant, dans le domaine spectral de 400 nm à 650 nm, seulement un unique maximum de réflexion local pour le rayonnement polarisé p, lequel se trouve dans le domaine de 510 nm à 550 nm.
